# EUROPEAN PATENT SPECIFICATION

(11) **EP 3 752 267 B1**
(45) Date of publication and mention of the grant of the patent: **29.11.2023**
(21) Application number: 19708168.0
(22) Date of filing: 06.02.2019
(51) Int. Cl.: B01D 35/06, B01D 29/35, B01D 29/90, B01D 29/92

(54) **DEVICE AND METHOD FOR FILTERING A FLUID CIRCULATING IN A PLUMBING AND HEATING SYSTEM**
VORRICHTUNG UND VERFAHREN ZUM FILTERN EINER IN EINEM SANITÄR- UND HEIZSYSTEM ZIRKULIERENDEN FLÜSSIGKEIT
DISPOSITIF ET PROCÉDÉ DE FILTRAGE D'UN FLUIDE CIRCULANT DANS UN SYSTÈME DE PLOMBERIE ET DE CHAUFFAGE

(30) Priority: 14.02.2018 IT 201800002685
(43) Date of publication of application: 23.12.2020
(73) Proprietor: I.V.A.R. S.P.A., 25080 Prevalle (BS) (IT)
(72) Inventor: BERTOLOTTI, Mr. Umberto, 25080 Prevalle (BS) (IT)
(74) Representative: PGA S.p.A.
(86) International application number: PCT/IB2019/050952
(87) International publication number: WO 2019/159039

(56) References cited:
- EP-A1- 2 543 640
- WO-A1-96/04062
- US-A1- 2017 240 440

## Description

The present invention relates to a device, and an associated method, for filtering a fluid circulating in a plumbing and heating system

The invention has advantageous application in the context of plumbing systems for temperature regulation and/or the supply of domestic hot water in residential, commercial or industrial buildings.

Heating or domestic hot water supply systems provide for the circulation of a fluid, typically water, which circulates through the various system components (pipes, boiler, pump, valves, radiant elements, utilities, etc.).

In such systems the use of filters suitable for maintaining the circulating fluid as clean as possible, i.e. free of impurities, such as dirt, sand, polluting particles, etc., is well known. This is because such impurities, while circulating within the system, can provoke clogging, faults in some components, in particular the boiler and the valves, and in general cause a deterioration in the performance of the various components and a loss of overall efficiency.

Among the various impurities, it is particularly important to remove the ferrous particles - typically released by system components such as pipes and radiant elements (for example heaters and radiators) - since they can cause breaks inside the boiler members or perforations in the pipes of the system.

The filters are usually installed interposed between the line carrying the fluid returning from the system, typically containing impurities and ferrous particles, and the line that sends the incoming fluid to the boiler (or heat pump). In this manner, the filter can act on the delivery to the boiler, that is, upstream of the latter, by sending fluid that has been filtered and cleaned of impurities.

Because of this typical installation, the known filters are usually identified as "under-boiler" filters; moreover, in the jargon of this technical sector, such filters are called "dirt separators", because of their function of removing impurities.

Providing that the filter may be opened in order to carry out periodic maintenance operations, and in particular to remove the impurities collected by the filter or replace the filtering elements, is likewise known.

One known type of filter provides both for the use of mesh filtering elements, which retain impurities such as sand and dirt, and the use of filtering elements of a magnetic type, which enable the ferrous particles to be separated from the fluid in transit by attracting them and holding them in contact with the magnetic element. An example of a mechanic magnetic filter is described in European patent application EP3159313A1. This solution envisages a filter body provided with three distinct inlet/outlet mouths, identical to one another, two of which lateral, in opposite positions of the body, and an upper one; essentially, the three mouths are arranged like a "T". At the time of installation, it is possible to select which of the three mouths will be connected to the return line of the system and which must instead be connected to the line delivering to the boiler. This allows the filter to be installed vertically or horizontally, based on the space available beneath the boiler (which in some cases is very limited) and the position of the wall the boiler is fixed to, by appropriately connecting the mouths.

It is further known from patent EP2543640 A a fluid treatment device comprising a chamber, guide plates and a manual switching mechanism including a valve core which is able to be manually operated. The valve core is provided on the side of the treatment device main body, and is able to be manually operated so as to be located in a treatment position and a backwash position.

Document US2017240440 A describes a filter comprising a housing, a protective bushing, a magnetic bar and a filter screen. The protective bushing comprises a cavity and a channel. The magnetic bar inside the filter can adsorb metal impurities in the water in the channel; the channel is in S shape to increase the length of the flow path of the water so that the metal impurities in the water can be guaranteed to be sufficiently adsorbed by the magnetic bar; the filter screen can filter out non-metal impurities in the water. The filter is attached with an operating handle, which allows to disassemble the filter to clear up the impurities.

The Applicant has found that the prior art solutions described above are not without drawbacks and could be improved in several respects.

First of all, the known solutions provided with three mouths arranged like a "T" are capable of filtering effectively only when the central mouth, i.e. the one situated on top of the filter body, is used for the entry of fluid into the filter or for the exit of fluid from the filter. This is because the known solutions envisage a cylindrical mesh filtering element (mechanical filtering) disposed longitudinally inside the filtration chamber, for the entire length of the chamber itself, and a magnetic filtering element disposed, in turn, inside the cylindrical mesh element. In this configuration, the central mouth (situated on top of the body of the cylinder) is inside the cylindrical mesh element, whereas the two lateral mouths (on opposite sides of the body of the cylinder) are instead outside the cylindrical mesh element.

This means, in particular in configurations in which the two lateral mouths are used for the entry of the fluid to be filtered and the exit of the filtered fluid (and the upper mouth is capped), that the flow can easily travel through the filtration chamber, passing around the cylindrical mesh element, without being obliged to pass through it, and as a result most of the fluid passes through the filter without being subjected to mechanical filtering (i.e. without passing through the mesh), with a consequent reduced filtering of impurities and dirt, and without flowing in proximity to the magnetic element, with a consequent reduced filtering of the ferrous particles.

In short, although some of the known solutions are proposed for a use according to various configurations, intended to meet different installation needs, they operate efficiently in one configuration only, whereas in other configurations there is no passage of the entire flow through the filtering elements, only a simple transit from the inlet mouth to the outlet mouth.

In addition, the known solutions pose a risk of clogging of the cylindrical mesh element that performs the mechanical filtering, because of the non-optimal management of the flows circulating inside the filtration chamber. Clogging introduces a decrease in the rate of flow through the filter, or even complete obstruction.

Furthermore, the known filters are not able to provide effective solutions, in terms of assembly, access and maintenance, for all the different installation conditions and the different types of boilers, heat exchangers or heat pumps.

In this situation the object at the basis of the present invention, in the various aspects and/or embodiments thereof, is to provide a device and a method for filtering a fluid that may be capable of remedying one or more of the above-mentioned drawbacks.

A further object of the present invention is to provide a device and a method capable of achieving an effective filtration of a fluid circulating in a plumbing and heating system.

A further object of the present invention is to provide a device for filtering a fluid that is characterised by great versatility and is capable of being adapted to a high number and different types of boilers or other components of a heating system.

A further object of the present invention is to provide a device for filtering a fluid capable of operating with consistent high performances irrespective of the mode of installation inside a plumbing and heating system.

A further object of the present invention is to provide a device for filtering a fluid characterised by a high operating reliability and/or a lower predisposition to faults and malfunctions and/or which is capable of being maintained in a simple and rapid manner.

A further object of the present invention is to provide a device for filtering a fluid characterised by a simple and rational structure.

A further object of the present invention is to provide a device for filtering a fluid characterised by a low production cost in relation to the performances and quality offered.

A further object of the present invention is to create alternative solutions to the prior art in the construction of devices and methods for filtering a fluid circulating in a plumbing and heating system, and/or to open new fields of design.

These objects, and any others that will become more apparent in the course of the following description, are substantially achieved by a device for filtering a fluid and a method for filtering a fluid according to one or more of the appended claims.

In a first aspect thereof, the invention relates to a device for filtering a fluid according to claim 1, fluid, comprising a body of the device which defines therewithin a filtration chamber that is intended to have a fluid to be subjected to filtration pass through it, said body being provided with:
- a first inlet/outlet opening, which sets said filtration chamber in communication with the outside of the device and is configured to be associated with a line so as to receive therefrom, or to send thereto, fluid entering, or exiting from, said body of the device;
- a second inlet/outlet opening, which sets said filtration chamber in communication with the outside of the device and is configured to be associated with a respective line so as to receive therefrom, or to send thereto, fluid entering, or exiting from, said body of the device;
- a third inlet/outlet opening, which sets said filtration chamber in communication with the outside of the device and is configured to be associated with a respective line so as to receive therefrom, or to send thereto, fluid entering, or exiting from, said body of the device.

In one aspect, the device is configured to operate a passage of fluid through said filtration chamber, in a selective manner according to a plurality of operative configurations, from one opening among said first inlet/outlet opening, second inlet/outlet opening and third inlet/outlet opening to another opening among said first inlet/outlet opening, second inlet/outlet opening and third inlet/outlet opening.

In one aspect, the device comprises filtering members that are at least partially housed inside said filtration chamber, or associated with said body of the device, and operatively interposed between said first inlet/outlet opening, second inlet/outlet opening and third inlet/outlet opening to carry out filtering of the fluid passing through the filtration chamber.

The device comprises a flow-directing insert that is housed inside said filtration chamber and configured to channel the fluid passing through the filtration chamber, in each one of said plurality of operative configurations, so that the fluid passes at least partially through said filtering members.

In one aspect, the device is configured to be associated with or installed along a delivery line, or in series with a delivery line, carrying a fluid to equipment of a plumbing and heating system, to operate a filtration of the fluid circulating in the system in a position upstream of such equipment.

The flow-directing insert is configured to operate selectively at least in either:
- a first position for use, in which it channels the fluid circulating inside the filtration chamber so as to prevent direct passage of the fluid, without passing through the filtering members, from the first opening to the second opening or from the first opening to the third opening;
- a second position for use, in which it channels the fluid circulating inside the filtration chamber so as to prevent direct passage of the fluid, without passing through the filtering members, from the second opening to the first opening or from the third opening to the first opening.

In one aspect, said plurality of operative configurations comprises at least:
- a first operative configuration, in which said first opening receives a flow of fluid entering the device, said second opening sends the flow of filtered fluid exiting from the device and said third opening is intercepted by a closure element;
- a second operative configuration, in which said first opening receives a flow of fluid entering the device, said third opening sends the flow of filtered fluid exiting from the device and said second opening is intercepted by a closure element;
- a third operative configuration, in which said third opening receives a flow of fluid entering the device, said first opening sends the flow of filtered fluid exiting from the device and said second opening is intercepted by a closure element;
- a fourth operative configuration, in which said second opening receives a flow of fluid entering the device, said first opening sends the flow of filtered fluid exiting from the device and said third opening is intercepted by a closure element.

In one aspect, the device comprises said closure element, configured to selectively intercept one opening among said first inlet/outlet opening, second inlet/outlet opening and third inlet/outlet opening.

In one aspect, the flow-directing insert is configured to be positioned selectively:
- in said first position for use, when the device operates in said first operative configuration or in said second operative configuration;
- in said second position for use, when the device operates in said third operative configuration or in said fourth operative configuration.

In one aspect, the flow-directing insert has a central axis, an external wall extending about said central axis and a passage section inside the external wall and perpendicular to the central axis, the insert having two opposite sides with respect to the central axis, wherein:
- the first side is provided, on the external wall, with an edge that is raised with respect to the passage section, and a partition that intercepts said passage section;
- the second side lacks a raised edge on the external wall and lacks a partition on the passage section, thus enabling the passage of fluid through the passage section, and it is provided with a separation portion emerging radially from the external wall.

In one aspect, the insert is structured in such a manner that:
- the second side enables the passage of fluid, coming from the outside of the insert, through the passage section, along a first direction along said central axis;
- the first side obstructs the passage of fluid, coming from the outside of the insert, through the passage section, and determines a process of directing it along a second direction along said central axis, opposite said first direction.

In one aspect, said first side and said second side constitute two halves of said insert which face each other and are connected along a dividing plane in which the central axis of the insert lies.

In one aspect:
- in said first position for use, the insert is positioned in such a manner that the first side thereof faces the third inlet/outlet opening and the second side thereof faces the first inlet/outlet opening;
- in said second position for use, the insert is positioned in such a manner that the first side thereof faces the first inlet/outlet opening and the second side thereof faces the third inlet/outlet opening.

In one aspect, the flow-directing insert is located inside the filtration chamber, in such a manner as to surround the second inlet/outlet opening.

In one aspect, the filtration chamber is delimited laterally by a lateral surface, above by a top surface and below by a bottom surface of the body of the device.

In one aspect, the second inlet/outlet opening is provided with a dividing wall extending inside the filtration chamber and located between the longitudinal axis of the body of the device and the first inlet/outlet opening. In one aspect, said dividing wall extends, starting from the second inlet/outlet opening, inside the filtration chamber along a direction parallel to the longitudinal axis of the body of the device and substantially to a height coinciding with the dimensions of the first inlet/outlet opening on the external lateral surface of the body of the device.

In one aspect, the dividing wall extends, inside the filtration chamber, from the top surface delimiting the chamber from above.

In one aspect, the dividing wall ends below with a portion for diverting the fluid, which extends towards the longitudinal axis of the body of the device.

In one aspect, the insert is located inside the filtration chamber, in such a manner that the external wall externally surrounds the diverting portion of the dividing wall.

In one aspect, the diverting portion of the dividing wall is complementarily shaped with respect to the partition of the first side of the insert.

In one aspect, the positioning of the insert and the diverting portion of the dividing wall with respect to each other is such as to determine that:
- when the insert is selectively set into said first position for use, the first side of the insert is on the side opposite the diverting portion with respect to the longitudinal axis of the body, and facing it, so that the partition and the diverting portion completely intercept the passage section of the insert, preventing the passage of fluid through the passage section;
- when the insert is selectively set into said second position for use, the first side of the insert is on the same side as the diverting portion, with respect to the longitudinal axis, and externally embraces the diverting portion, whereas the second side of the insert is on the side opposite the diverting portion with respect to the longitudinal axis of the body, and as the second side lacks a partition, it enables the passage of fluid through the passage section.

In one aspect, when the insert is selectively set into said first position for use, surface continuity is created between the partition and the diverting portion and it is such as to completely intercept the passage section of the insert.

In one aspect, the filtering members comprise a mechanical filter configured to separate substances and solid particles present in the fluid to be treated from the fluid itself in which they are suspended, the mechanical filter having a structure provided with a plurality of passages that have a given filtering section, so that the passage of the fluid from one internal side of the mechanical filter to an external side of the mechanical filter determines retention, on the internal side, of the substances and particles present in the fluid and having dimensions greater than said filtering section. On the other hand, if the passage of the fluid takes place from the external side of the structure to the internal side of the structure, the retention of the substances and particles present in the fluid and having a larger dimension than said filtering section takes place on the external side.

In one aspect, the filtering members comprise a magnetic filter associated with the body of the device and configured to collect and retain substances and ferrous particles (or particles having ferromagnetic properties) that are present in the fluid to be treated, in such a manner as to separate them from the fluid passing through the device.

In an independent aspect thereof, the present invention relates to a heating system comprising a device according to one or more of the above aspects.

In an independent aspect thereof, the present invention relates to a method for filtering a fluid circulating in a plumbing and heating system, comprising the steps of:
- arranging at least one device for filtering a fluid;
- identifying a line coming from a plumbing and heating system, particularly a heating water return line from a system of heating elements, carrying a flow of water to be subjected to filtration;
- identifying a line directed to a boiler of the plumbing and heating system, this line carrying a flow of water that has undergone filtration to the boiler;
- operating the device selectively in one of the following operative configurations:
- a first operative configuration, comprising the steps of:
   - hydraulically connecting the first inlet/outlet opening with a line coming from a plumbing and heating system, particularly a heating water return line from a system of heating elements, so as to receive a flow of water to be subjected to filtration;
   - hydraulically connecting the second inlet/outlet opening with a line directed to a boiler of the plumbing and heating system, so as to send thereto the flow of water following filtration;
   - intercepting the third inlet/outlet opening by means of a closure element;
   - positioning the flow-directing insert in said first position for use;
   - via the second side of the insert, and via the outside of the dividing wall, conveying the flow of fluid entering the first opening directly through the passage section of the insert and from there to the second portion of the filtration chamber inside the mechanical filter, where the fluid is filtered by the magnetic filter;
   - making the fluid flow out, through the mechanical filter, from the second portion of the filtration chamber so as to make it pass into the first portion of the filtration chamber, and from there conveying it through the first side of the insert, towards the second opening, the fluid not being able to pass through the passage section again because of the partition of the first side of the insert and the diverting portion of the dividing wall;
- a second operative configuration, comprising the steps of:
   - hydraulically connecting the first inlet/outlet opening with a line coming from a plumbing and heating system, particularly a heating water return line from a system of heating elements, so as to receive a flow of water to be subjected to filtration;
   - intercepting the second inlet/outlet opening by means of a closure element;
   - hydraulically connecting the third inlet/outlet opening with a line directed to a boiler of the plumbing and heating system, so as to send thereto the flow of water following filtration;
   - positioning the flow-directing insert in said first position for use;
   - via the second side of the insert, and via the outside of the dividing wall, conveying the flow of fluid entering the first opening directly through the passage section of the insert and from there to the second portion of the filtration chamber inside the mechanical filter, where the fluid is filtered by the magnetic filter;
   - making the fluid flow out, through the mechanical filter, from the second portion of the filtration chamber so as to make it pass into the first portion of the filtration chamber, and from there conveying it through the first side of the insert, towards the third opening, the fluid not being able to pass through the passage section again because of the partition of the first side of the insert and the diverting portion of the dividing wall;
- a third operative configuration, in which:
   - the third inlet/outlet opening is hydraulically connected with a line coming from a plumbing and heating system, particularly a heating water return line from a system of heating elements, so as to receive a flow of water to be subjected to filtration;
   - the second inlet/outlet opening is intercepted by a closure element;
   - the first inlet/outlet opening is hydraulically connected with a line directed to a boiler of the plumbing and heating system, so as to send thereto the flow of water following filtration;
   - the flow-directing insert is positioned in said second position for use;
   - via the second side of the insert, the flow of fluid entering the third opening is conveyed directly through the passage section of the insert and from there to the second portion of the filtration chamber inside the mechanical filter, where the fluid is filtered by the magnetic filter;
   - the fluid flows out, through the mechanical filter, from the second portion of the filtration chamber and passes into the first portion of the filtration chamber, and from there it is conveyed through the first side of the insert towards the first opening, the fluid not being able to pass through the passage section again because of the raised edge of the first side of the insert and the outside of the dividing wall;
- a fourth operative configuration, comprising the steps of:
   - hydraulically connecting the second inlet/outlet opening with a line coming from a plumbing and heating system, particularly a heating water return line from a system of heating elements, and receiving a flow of water to be subjected to filtration;
   - intercepting the third inlet/outlet opening by means of a closure element;
   - hydraulically connecting the first inlet/outlet opening with a line directed to a boiler of the plumbing and heating system, so as to send thereto the flow of water following filtration;
   - positioning the flow-directing insert in said second position for use;
   - via the second side of the insert, conveying the flow of fluid entering the second opening directly through the passage section of the insert and from there to the second portion of the filtration chamber inside the mechanical filter, where the fluid is filtered by the magnetic filter;
   - making the fluid flow out, through the mechanical filter, from the second portion of the filtration chamber so as to make it pass into the first portion of the filtration chamber, and from there conveying it through the first side of the insert towards the first opening, the fluid not being able to pass through the passage section again because of the raised edge of the first side of the insert and the outside of the dividing wall.

Each of the aforesaid aspects of the invention can be taken on its own or in combination with any of the claims or the other aspects described.

Additional features and advantages will become more apparent from the detailed description of some example, but not exclusive, embodiments, including a preferred embodiment, of a device and a method for filtering a fluid circulating in a plumbing and heating system in accordance with the present invention. This description is provided herein below with reference to the attached drawings, which are provided solely for purpose of providing approximate and thus non-limiting examples, and of which:
- figure 1 illustrates a possible embodiment of a device for filtering a fluid according to the present invention;
- figure 2 shows a front view of the device of figure 1;
- figure 3 shows a top view of the device of figure 1;
- figure 4 shows an exploded perspective view of the device of figure 1;
- figure 5 shows a sectional view, along the plane V-V, and exploded view of the device of figure 1, along a longitudinal direction, with some parts removed;
- figure 6 shows a perspective view of a flow-directing insert that is part of the device of figure 1;
- figure 7 shows a further perspective view of the insert of figure 6;
- figure 8 shows a side view, from the left with respect to figure 6, of the insert of figure 6;
- figure 9 shows a side view, from the right with respect to figure 6, of the insert of figure 6;
- figure 10 shows a top view of the insert of figure 6;
- figure 11 shows a middle sectional view, along the plane XI-XI, of the insert of figure 6;
- figure 12 shows the device of figure 1, sectioned along the plane V-V in a first operative configuration;
- figure 13 shows the device of figure 1, sectioned along the plane V-V in a second operative configuration;
- figure 14 shows the device of figure 1, sectioned along the plane V-V in a third operative configuration;
- figure 15 shows the device of figure 1, sectioned along the plane V-V in a fourth operative configuration.

With reference to the above-mentioned figures, the reference number 1 denotes in its entirety a device for filtering a fluid in accordance with the present invention. In general, the same reference number is used for identical or similar elements, possibly in the variant embodiments thereof.

The device 1 is intended to carry out the filtration of the fluid, typically water, circulating inside a plumbing and heating system, usually comprising pipes and conduits, valves, a boiler or a power generator, pumps, radiant elements (heaters, radiators, floor heating coils, etc.), utilities, etc.

In the figures the system for which the device is intended is not illustrated or described in a detailed manner, since it is in itself known in the technical field of the present invention.

The device 1 comprises first of all a body 2, which defines therewithin a filtration chamber 3 intended to have a fluid to be subjected to filtration pass through it. The body 2 is provided with a first inlet/outlet opening 10, a second inlet/outlet opening 20 and a third inlet/outlet opening 30: each one of them sets said filtration chamber 3 in communication with the outside of the device and is configured to be associated with a line of the system so as to receive therefrom, or to send thereto, fluid entering, or exiting from, said body of the device.

The device 1 is configured to operate a passage of fluid through the filtration chamber 3, from one opening among said first opening 10, second opening 20 and third inlet/outlet opening 30 to another opening among said first opening 10, second opening 20 and third inlet/outlet opening 30. The two openings (among the aforesaid three openings 10, 20 and 30) between which the passage of fluid takes place can be selected as desired, according to a plurality of operative configurations, as will emerge more clearly below.

The device 1 comprises filtering members 40 that are at least partially housed inside the filtration chamber 3, or associated with the body 2 of the device, and operatively interposed between the three inlet/outlet openings 10, 20 and 30, to carry out filtering of the fluid passing through the filtration chamber 3.

The device 1 further comprises a flow-directing insert 70 that is housed inside the filtration chamber 3 and configured to channel the fluid passing through the filtration chamber, in each one of the plurality of operative configurations, so that the fluid always passes at least partially through the filtering members 40.

In particular, the flow-directing insert 70 is configured to operate selectively at least in either:
- a first position for use, in which it channels the fluid circulating inside the filtration chamber 3 so as to prevent direct passage of the fluid, without passing through the filtering members 40, from the first opening 10 to the second opening 20 or from the first opening 10 to the third opening 30;
- a second position for use, in which it channels the fluid circulating inside the filtration chamber 3 so as to prevent direct passage of the fluid, without passing through the filtering members 40, from the second opening 20 to the first opening 10 or from the third opening 30 to the first opening 10.

The device preferably comprises a closure element 4 configured to selectively intercept one opening among the aforesaid first opening 10, second opening 20 and third inlet/outlet opening 30.

According to a preferred embodiment, the plurality of operative configurations comprises:
- a first operative configuration, in which the first opening 10 receives a flow of fluid entering the device, the second opening 20 sends the flow of filtered fluid exiting from the device and the third opening is intercepted by the closure element 4;
- a second operative configuration, in which the first opening 10 receives a flow of fluid entering the device, the third opening 30 sends the flow of filtered fluid exiting from the device and the second opening 20 is intercepted by the closure element 4;
- a third operative configuration, in which the third opening 30 receives a flow of fluid entering the device, the first opening 10 sends the flow of filtered fluid exiting from the device and the second opening 20 is intercepted by the closure element 4;
- a fourth operative configuration, in which the second opening 20 receives a flow of fluid entering the device, the first opening 10 sends the flow of filtered fluid exiting from the device and the third opening 30 is intercepted by the closure element 4.

The closure element 4 is preferably a cap, removably associable with the openings.

It is evident that in each one of the operative configurations, one of the three openings acts as an inlet, another of the three openings acts as an outlet and the remaining opening is closed off and preferably not used.

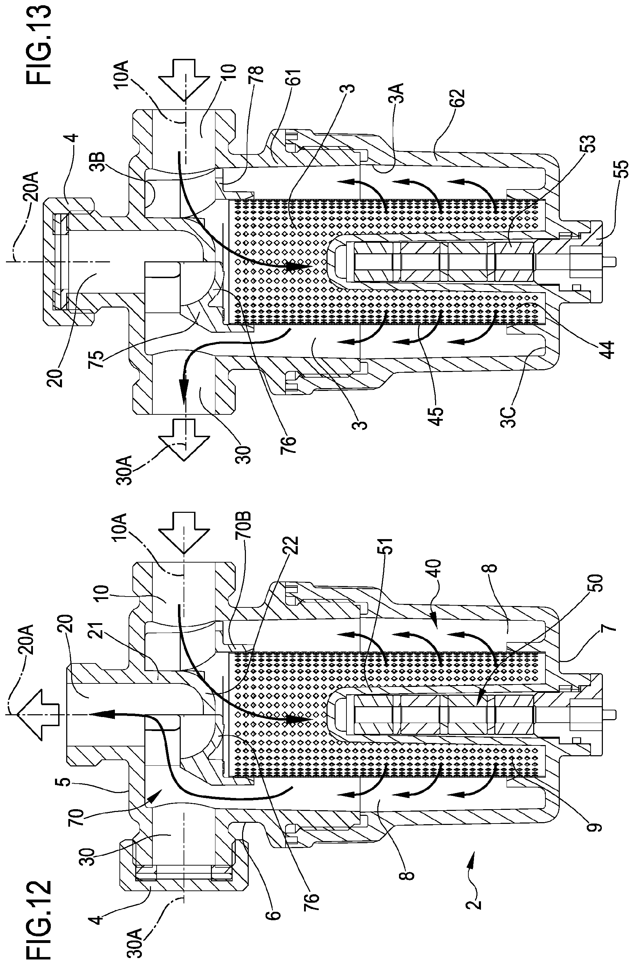

The operative configurations are represented in figures 12-15, and will be discussed in detail in the description below.

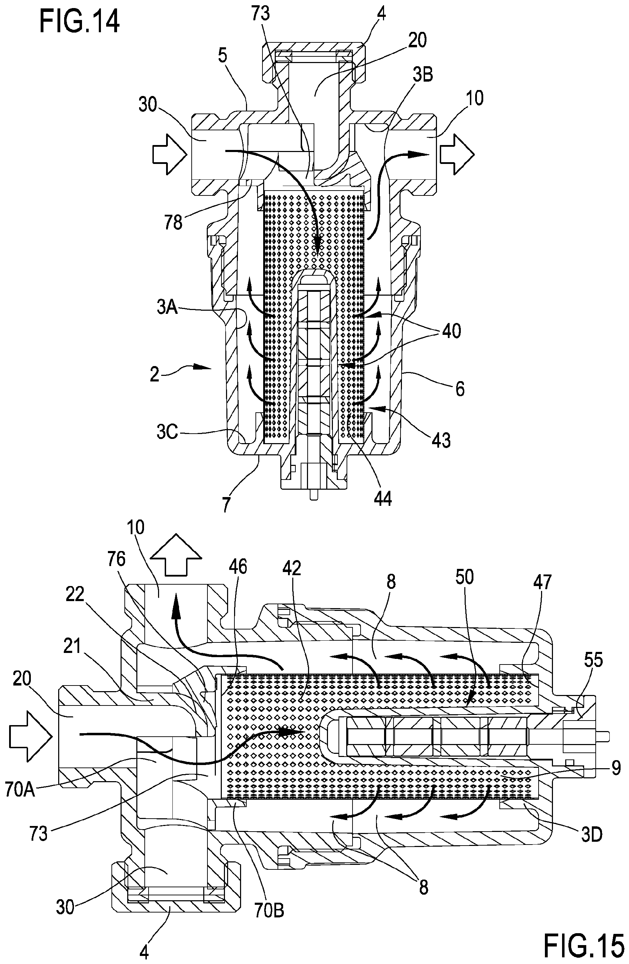

Given the four configurations identified above, the flow-directing insert 70 is configured to be positioned selectively:
- in the aforesaid first position for use (figures 12 and 13), when the device operates in the first operative configuration or in the second operative configuration;
- in the aforesaid second position for use (figures 14 and 15), when the device operates in the third operative configuration or in the fourth operative configuration.

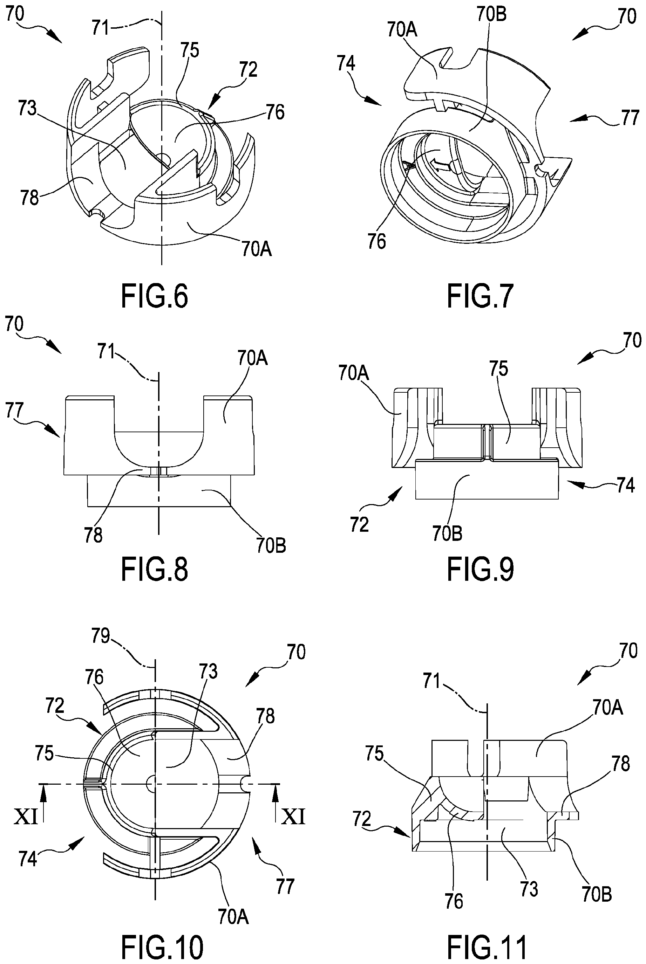

According to the embodiment shown by way of example in the figures, and in particular in figures 6-11, the flow-directing insert 70 has a central axis 71, an external wall 72 extending about the central axis and a passage section 73 inside the external wall and perpendicular to the central axis. The external wall 72 preferably extends completely about the central axis 71, so as to form a closed loop structure, which defines therewithin the passage section 73. The insert 70 preferably has two opposite sides with respect to the central axis 71, that is, a first side 74 and a second side 77, wherein:
- the first side 74 is provided, on the external wall 72, with an edge 75 that is raised with respect to the passage section 73, and a partition 76 that intercepts the passage section;
- the second side 77 lacks a raised edge on the external wall and lacks a partition on the passage section, thus enabling the passage of fluid through the passage section 73, and is provided with a separation portion 78 emerging radially from the external wall 72, away from the central axis 71.

The separation portion 78 of the second side 77 is substantially in the place of the raised edge 75 on the first side 74. The separation portion is preferably configured to horizontally convey a flow of fluid coming from the outside of the second side, whereas the raised edge is configured to prevent a passage of flow from the outside of the external wall towards the inside of the insert 70.

The separation portion 78 is preferably substantially aligned with the passage section 73.

The insert 70 is preferably structured in such a manner that:
- the second side 77 enables the passage of fluid, coming from the outside of the insert 70, through the passage section 73, along a first direction along the central axis 71;
- the first side 74 obstructs the passage of fluid, coming from the outside of the insert 70, through the passage section 73, and determines a process of directing it along a second direction along the central axis 71, opposite the first direction.

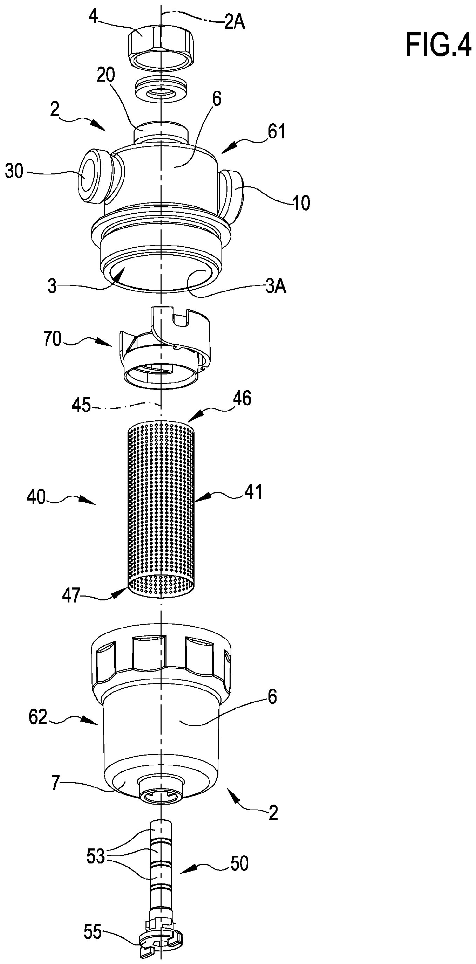

In figures 4-15 the aforesaid first direction along the central axis 71 is turned downwards, whereas the aforesaid second direction is turned upwards.

The first side 74 and the second side 77 preferably constitute two halves of the insert 70 which face each other and are connected along a dividing plane 79 in which the central axis 71 of the insert lies.

The insert 70 is preferably made of a single piece. The insert 70 is preferably made of a plastic or metal material.

The insert 70 is preferably symmetric (or specular) with respect to a plane of symmetry (the plane XI-XI in figure 10) in which the central axis 71 lies and perpendicular to the dividing plane 79.

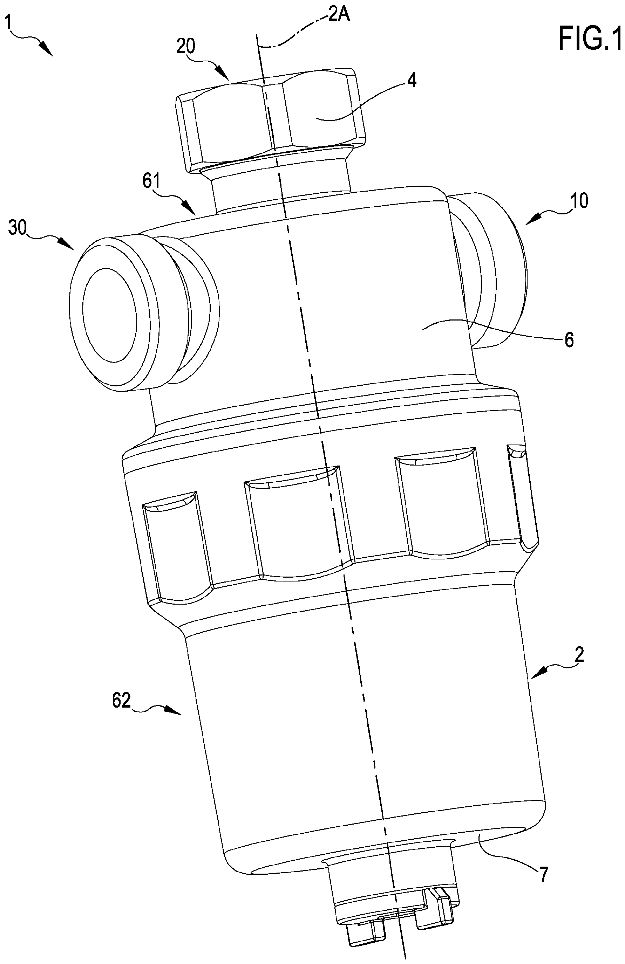

According to the embodiment shown by way of example in the figures, and in particular in figures 1-5 and 12-15, the body 2 of the device has a substantially cylindrical shape and it has a longitudinal axis 2A, an upper surface 5, an external lateral surface 6 and a lower surface 7.

The body preferably has the conformation of a solid rotating about the longitudinal axis 2A and has a radial symmetry thereabout.

The first inlet/outlet opening 10 and the third inlet/outlet opening 30 are preferably located on the external lateral surface 6 of the body 2 of the device and on opposite sides with respect to the filtration chamber 3. The second inlet/outlet opening 20 is preferably located on the upper surface 5 of the body 2 of the device. The first inlet/outlet opening 10, the second inlet/outlet opening 20 and the third inlet/outlet opening 30 preferably have a circular cross section and each one has a respective central axis (the central axes of the openings are indicated in the figures by 10A, 20A and 30A, respectively).

The central axis 20A of the second inlet/outlet opening 20 preferably coincides with the longitudinal axis 2A of the body 2 of the device.

All three of the respective central axes 10A, 20A and 30A of the first inlet/outlet opening 10, of the second inlet/outlet opening 20 and of the third inlet/outlet opening 30 preferably intersect (preferably in a same point inside the filtration chamber 3) the longitudinal axis 2A of the body 2 of the device.

The respective central axes 10A and 30A of the first inlet/outlet opening 10 and of the third inlet/outlet opening 30 are preferably orthogonal to the longitudinal axis 2A of the body 2 of the device.

The respective central axes 10A and 30A of the first inlet/outlet opening 10 and of the third inlet/outlet opening 30 preferably coincide with each other.

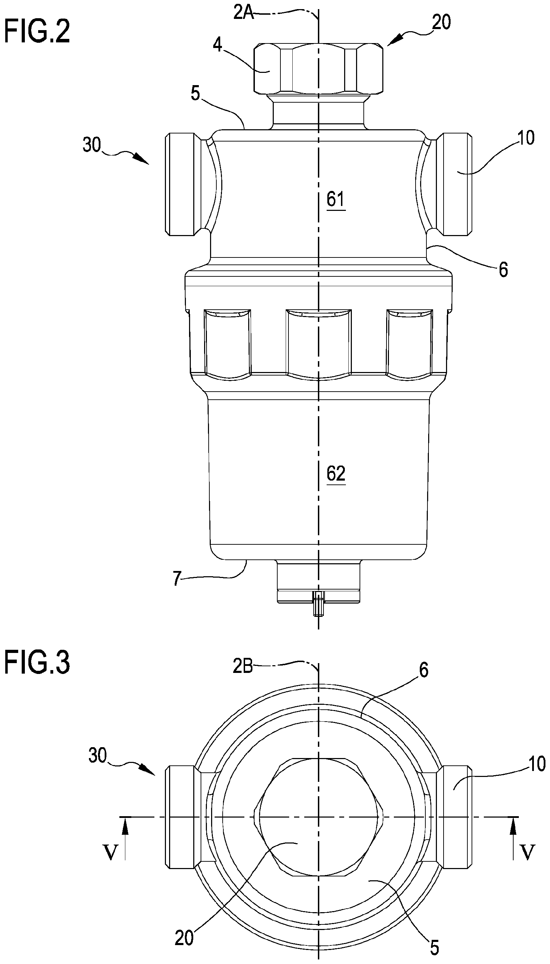

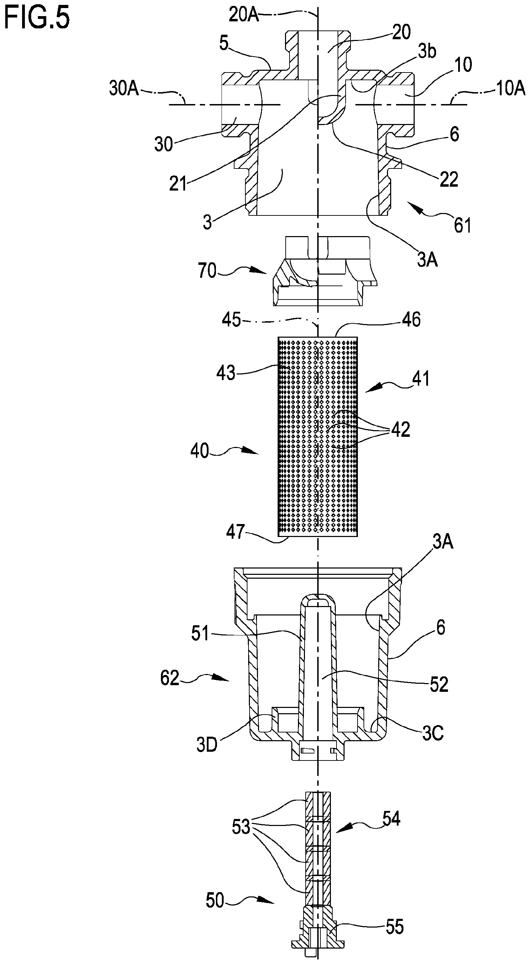

The body of the device preferably has a central plane of symmetry V-V in which the longitudinal axis 2A lies, said central plane of symmetry dividing the body 2 of the device into two substantially identical halves. The plane V-V is indicated in figure 3, and the sections in figures 5 and 12-15 are drawn with respect to it.

The body of the device is substantially symmetric also with respect to a median plane 2B, in which the longitudinal axis 2A lies and which is orthogonal to the central plane of symmetry V-V.

All three of the respective central axes 10A, 20A and 30A of the first opening 10, of the second opening 20 and of the third opening 30 preferably lie in the plane of symmetry V-V of the body 2 of the device.

The central axis 71 of the insert 70 preferably coincides with the longitudinal axis 2A of the body 2 of the device.

The central axis 71 of the insert 70 preferably coincides with the respective central axis 20A of the second inlet/outlet opening 20.

According to a preferred embodiment:
- in the first position for use (figures 12 and 13), the insert 70 is positioned in such a manner that the first side thereof 74 faces the third inlet/outlet opening 30 and the second side 77 thereof faces the first inlet/outlet opening 10;
- in the second position for use (figures 14 and 15), the insert 70 is positioned in such a manner that the first side thereof 74 faces the first inlet/outlet opening 10 and the second side 77 thereof faces the third inlet/outlet opening 30.

The passage of the insert 70 between the first position for use and the second position for use preferably takes place by means of a rotation, preferably of 180°, of the insert itself about its own central axis 71 (i.e. with respect to the longitudinal axis 2A of the body 2).

The flow-directing insert 70 is preferably located inside the filtration chamber 3, in such a manner as to surround the second inlet/outlet opening 20.

The filtration chamber 3 is preferably delimited laterally by a lateral surface 3A, above by a top surface 3B and below by a bottom surface 3C of the body 2 of the device.

The second inlet/outlet opening 20 is preferably provided with a dividing wall 21 extending inside the filtration chamber 3 and located between the longitudinal axis 2A of the body 2 and the first inlet/outlet opening 10.

In other words, the dividing wall 21 extends, inside the filtration chamber 3, entirely in one half of the filtration chamber comprised between the median plane 2B, orthogonal to the central plane of symmetry V-V of the body 2 and in which the longitudinal axis 2A lies, and the first inlet/outlet opening 10. An example embodiment of the dividing wall is shown in figures 5 and 12-15.

The dividing wall 21 preferably extends, starting from the second inlet/outlet opening 20, inside the filtration chamber 3 along a direction parallel to the longitudinal axis 2A of the body 2 of the device and substantially to a height coinciding with the dimensions of the first inlet/outlet opening 10 on the external lateral surface 6 of the body 2.

The dividing wall 21 preferably extends, inside the filtration chamber 3, starting from the top surface 3B delimiting the filtration chamber 3 from above.

The dividing wall 21 is preferably fixed with respect to the body 2 of the device.

The dividing wall 21 preferably ends below with a portion for diverting 22 the fluid, which extends towards the longitudinal axis 2A of the body of the device.

The flow-directing insert 70 is preferably located, inside the filtration chamber 3, in such a manner that its external wall 72 externally surrounds the diverting portion 22 of the dividing wall 21.

The diverting portion 22 of the dividing wall 21 is preferably complementarily shaped with respect to the partition 76 of the first side 74 of the insert 70.

Observe figures 12-15. The positioning of the flow-directing insert 70 and the diverting portion 22 of the dividing wall 21 with respect to each other is preferably such as to determine that:
- when the insert 70 is selectively set into the first position for use (figures 12 and 13), the first side 74 of the insert is on the side opposite the diverting portion 22 with respect to the longitudinal axis 2A of the body 2, and facing it, so that the partition 76 and the diverting portion 22 completely intercept the passage section 73 of the insert, preventing the passage of fluid through the passage section 73;
- when the insert is selectively set into the second position for use (figures 14 and 15), the first side 74 of the insert is on the same side of the diverting portion 22 with respect to the longitudinal axis 2A, and externally embraces the diverting portion 22, whereas the second side 77 of the insert 70 is on the side opposite the diverting portion 22 with respect to the longitudinal axis 2A, and as the second side 77 lacks a partition, it enables the passage of fluid through the passage section 73.

In other words:
- when the insert 70 is selectively set into the first position for use (figures 12 and 13), the partition 76 intercepts one half of the passage section 73 of the insert, thus obstructing the passage of fluid, and the diverting portion 22 intercepts the other half of the passage section 73 of the insert, thus obstructing in turn the passage of fluid; the partition 76 and the diverting portion 22 together entirely block off the passage of fluid through the passage section 73;
- when the insert 70 is selectively set into the second position for use (figures 14 and 15), the partition 76 is on the same side as the diverting portion 22, and fits together with it, as the partition and the diverting portion are complementarily shaped with respect to each other; the partition 76 and the diverting portion 22 intercept a same half of the passage section 73 of the insert 70, thus obstructing the passage of fluid in that half only; in contrast, the second side 77 of the insert is on the side opposite the diverting portion (and the partition) and, since the second side lacks a partition, the half of the passage section 73 affected by the second side 77 of the insert can have the fluid flow through it.

When the insert 70 is selectively set into the first position for use, surface continuity is preferably created between the partition and 76 the diverting portion 22 and it is such as to completely intercept the passage section 73 of the insert.

The first position for use and the second position for use of the insert 70 are preferably opposite each other with respect to the longitudinal axis 2A of the body 2 of the device.

Preferably, as shown in the figures, the partition 76 of the insert 70 substantially has the shape of a portion of a spherical crown (or a portion of a spherical shell); it preferably has the shape of a quarter of a spherical crown (or a quarter of a spherical shell).

Preferably, the diverting portion 22 of the dividing wall 21 substantially has a respective shape of a portion of a spherical crown (or a portion of a spherical shell); it preferably has the shape of a quarter of a spherical crown (or a quarter of a spherical shell).

Preferably, the partition 76 of the insert 70 substantially has a "half cup" shape, and has a surface having a given radius of curvature with respect to a centre.

Preferably, the diverting portion 22 of the dividing wall 21 substantially has a respective "half cup" shape, and has a surface having a given radius of curvature with respect to a centre.

The complementary shape of the partition 76 of the insert 70 with respect to the diverting portion 22 of the dividing wall 21 is preferably obtained by means of an appropriate dimensioning of the radii of the spherical crown portion defining the partition 76 and of the radii of the spherical crown portion defining the diverting portion 22.

The shape of a portion of a spherical crown (or a portion of a spherical shell or "half cup") of the partition 76 and of the diverting portion 22 enable the rotation of the insert 70 (movable) with respect to the diverting portion 22 (fixed) and thus the passage of the insert between the first position for use and the second position for use, otherwise impossible due to dimensional interference. The passage of the insert from the first to the second position for use takes place with a rotation of 180°, which determines a sliding of the partition 76 under the diverting portion 22 (with the "opening" of half of the passage section 73); an opposite rotation of 180°, whereby the insert passes from the second to the first position for use, brings the partition 76 side by side with the diverting portion 22 so as to form a complete spherical half-shell (or half spherical crown) which completely blocks off the passage section 73.

It should be observed that the dividing wall 21 and the diverting portion 22 are part of the body of the device, but they are functionally attributable to the second inlet/outlet opening 20.

The first opening 10, the second opening 20 and the third inlet/outlet opening 30 preferably have the same shape and size; more preferably, they are identical to one another.

The closure element 4 can preferably be selectively applied on any of the three inlet/outlet openings 10, 20 and 30, so as to determine the closure thereof. The first inlet/outlet opening 10, the second inlet/outlet opening 20 and the third inlet/outlet opening 30 preferably have respective interconnection means configured to fluidly connect the opening with external pipes, fittings or water valves. The interconnection means are preferably configured also to receive the closure element 4. The interconnection means preferably comprise threads or pressure connections or like mechanisms. The interconnection means of the first inlet/outlet opening 10, the second inlet/outlet opening 20 and the third inlet/outlet opening 30 are preferably structurally identical to one another. By way of example, the three inlet/outlet openings 10, 20 and 30 have standard sizes for the plumbing sector, for example a 1/4 inch, 1/2 inch, 3/4 inch or 1 inch diameter.

Reference will now be made in particular to figures 4-5 and 12-15.

The filtering members 40 preferably comprise a mechanical filter 41 configured to separate substances and solid particles present in the fluid to be treated from the fluid itself in which they are suspended. The mechanical filter 41 has a structure provided with a plurality of passages 42 that have a given filtering section, so that the passage of the fluid from an external side 43 of the structure to an internal side 44 of the structure determines retention, on the external side 43, of the substances and particles present in the fluid and having dimensions greater than the filtering section. In a wholly like manner, the passage of the fluid from the internal side 44 of the structure to the external side 43 of the structure determines retention, on the internal side 44, of the substances and particles present in the fluid and having dimensions greater than the filtering section.

The structure preferably has a meshwork (or a grid or a mesh or a fabric) or a plurality of micro holes.

The mechanical filter 41 is preferably made of metal material, preferably stainless steel.

The mechanical filter 41 preferably has a cylindrical shape extending around a central axis 45 between a first end 46 (upper end in the figures) and a second end 47 (lower end in the figures), and is positioned inside the filtration chamber 3 in such a manner that the central axis 45 coincides with the longitudinal axis 2A of the body 2 of the device.

At least the first end 46 of the mechanical filter 41 is preferably open.

The mechanical filter 41 preferably has a radial dimension (or diameter) that is smaller than the respective radial dimension (or respective diameter) of the filtration chamber 3, so as to be distanced from the lateral surface 3A of the chamber and define, inside the chamber 3, a first chamber portion 8 outside the mechanical filter 41 and a second chamber portion 9 inside the mechanical filter 41.

The mechanical filter 41 is preferably positioned axially between the bottom surface 3C of the body 2 and the flow-directing insert 70.

The external wall 72 of the insert 70 preferably comprises an upper collar 70A, configured to be positioned so as to abut on the top surface 3B of the filtration chamber 3, and a lower collar 70B, axially opposite the upper collar and configured to house the first end 46 of the mechanical filter 41.

The bottom surface 3C of the filtration chamber 3 preferably comprises an annular seat 3D configured to house the second end 47 of the mechanical filter 41.

In this manner, the mechanical filter 41 is axially and removably interposed between the lower collar 70B of the insert 70 and the annular seat 3D of the bottom surface 3C.

The lower collar 70B preferably has a diameter corresponding to the diameter of the mechanical filter 41. The annular seat 3D preferably has, internally or externally, a diameter corresponding to the diameter of the mechanical filter 41. In this manner, the centring of the mechanical filter 41 with respect to the longitudinal axis and with respect to the insert 70 is guaranteed.

The mechanical filter 41 is preferably positioned under the insert 70 so as not to be directly facing the three openings 10, 20 and 30.

The mechanical filter 41 is preferably positioned in the filtration chamber 3 so as to be in fluid communication with the three openings 10, 20 and 30, but under them along the longitudinal axis 2A of the body of the device (in a direction away from the second opening 20, or downwards according to the orientation shown in the figures).

The insert 70 is preferably in contact, at the bottom thereof, and axially aligned, with the mechanical filter 41.

The insert 70 is positioned between the top surface 3B and the first end of the mechanical filter; in this manner, the insert, once positioned in the phase of assembly and configuration of the device 1, remains stable throughout the operation of the device. However, the positioning of the insert is reversible, and this makes it possible to move the insert between the first and the second position for use every time there is an intention to modify the configuration of use (among the aforesaid four configurations) or disassemble the device completely for cleaning or maintenance operations.

As shown in figures 12-15, the separation portion 78 of the second side 77 of the insert is preferably shaped so as to be radially in contact with the lateral surface 3A of the filtration chamber 3, at the first opening 10 when the insert is in the first position for use and at the third opening 30 when the insert is in the second position for use. In this manner, the separation portion 78 prevents the passage of the fluid entering, respectively, from the first opening 10 (when the device operates in the first or second configuration, figures 12 and 13) or from the second 20 or third opening 30 (in the third or fourth configuration, respectively, figures 14 and 15), in the first portion 8 of the filtration chamber 3 (outside the mechanical filter 41), conveying the fluid horizontally directly towards the passage section 73 and from there into the second portion 9 of the filtration chamber 3.

This means that the separation portion 78 vertically separates, in all of the operative configurations, the opening from which the entry of the fluid takes place (based on the configuration) from the first portion 8 of the filtration chamber 3, thus forcing the entry of the fluid into the second portion 9 of the filtration chamber.

In other words, as may be seen in the figures, during the entry of the fluid, the separation portion 78 acts as a wall separating the upper part of the filtration chamber 3, into which the three openings 10, 20 and 30 lead, from the lower part, wherein the first chamber portion 8 outside the mechanical filter is defined.

It should be noted that, preferably, the first portion 8 of the separation chamber has the form of a hollow cylinder, where the hollow part is represented by the second portion 9 defined and delimited by the mechanical filter 41.

The filtering members 40 preferably comprise a magnetic filter 50 associated with the body 2 of the device and configured to collect and retain ferrous substances and particles (or in general ones having ferromagnetic properties) that are present in the fluid to be treated, in such a manner as to separate them from the fluid passing through the device.

The body 2 of the device preferably comprises a hollow protuberance 51 that emerges axially from the bottom surface 3C towards the top surface 3B, said hollow protuberance 51 defining, outside the body of the device, a housing 52 that is elongated in shape, corresponding (negatively) to the hollow protuberance 51 and accessible from the lower surface 7.

The magnetic filter 50 preferably comprises at least one magnetic element 53, which is configured to generate a permanent magnetic field and is inserted in the housing 52 of the body 2 in such a manner as to act upon the fluid passing through the filtration chamber 3 and retain the ferrous substances and particles present in the fluid on the surface of the hollow protuberance 51 inside the body 2 (in particular inside the chamber). Essentially, the magnetic filter 50 is positioned "inside" the filtration chamber, even if it is physically in the housing 52 accessible from outside the body 2 without accessing the filtration chamber.

The magnetic filter 50 preferably comprises a plurality of magnetic elements 53 associated with one another so as to form a rod-shaped magnetic cartridge 54 axially inserted into the housing 52 of the body of the device.

The body 2 of the device preferably comprises, on the lower surface 7, at the point of access to the housing 52, a cap 55 suitable for closing said at least one magnetic element 53 or said magnetic cartridge 54 inside the housing 52 and for enabling the extraction thereof as needed.

The hollow protuberance 51 emerging from the bottom surface is preferably entirely contained inside the mechanical filter 41, so that the magnetic filter 50 is positioned inside the second portion 9 of the filtration chamber 3. In this configuration, though the magnetic filter 50 is not in direct contact with the flow, that is, it is not directly touched by the fluid circulating in the filtration chamber, by virtue of its position and its magnetic effect it enables the ferrous particles on the hollow protuberance inside the body to be blocked. The device preferably comprises a removable sheath which wraps the hollow protuberance inside the filtration chamber. The ferrous material filtered out deposits on the sheath and, by removing the mechanical filter and opening the body of the device, it is possible to remove the sheath and clean it of the filtered material.

In an alternative embodiment, not shown, the magnetic filter can be housed directly inside the filtration chamber.

The body 2 preferably comprises a first half-body 61 and a second half-body 62, removably associated with each other, wherein:
- the assembly of the first half-body 61 with the second half-body 62 defines the filtration chamber 3, inside the body of the device, which is fluid tight towards the outside, with the exception of said first inlet/outlet opening 10, second inlet/outlet opening 20 and third inlet/outlet opening 30;
- the disassembly of the first half-body 61 from the second half-body 62 enables access to the filtration chamber 3 and positioning of the flow-directing insert 70.

Preferably:
- the first half-body 61 comprises the first opening 10, the second opening 20, the third inlet/outlet opening 30, the top surface 3B and the dividing wall 21 and houses the flow-directing insert 70;
- the second half-body 62 comprises the bottom surface 3C and the hollow protuberance 51.

The lateral surface 3A of the filtration chamber 3 is preferably defined in part by the first half-body 61 and in part by the second half-body 62.

The first half-body and the second half-body are preferably interconnected by means of a threaded coupling (not shown, of a known type).

The body 2 of the device preferably comprises a gasket interposed between the first half-body 61 and the second half-body 62 to ensure the tightness of the filtration chamber 3 in the assembled condition.

The four operative configurations introduced above are described below with reference to the specific figures 12, 13, 14 and 15. These configurations correspond to the different possible operating modes of the device of the present invention. As illustrated, the device 1 is configured to operate selectively in one of the operative configurations, according to installation requirements.

The first operative configuration is shown in figure 12; in this configuration:
- the first inlet/outlet opening 10 is intended to be set into communication with a line coming from a plumbing and heating system, particularly a heating water return line from a system of heating elements (for example heaters or radiators), so as to receive a flow of water to be subjected to filtration;
- the second inlet/outlet opening 20 is intended to be set into communication with a line directed to a boiler of the plumbing and heating system, so as to send thereto the flow of water following filtration;
- the third inlet/outlet opening 30 is intercepted by the closure element 4;
- the flow-directing insert 70 is in the first position for use;
- via the second side 77 of the insert, and in particular the separation portion 78 of the second side, and via the outside of the dividing wall 21, the flow of fluid entering the first opening 10 is conveyed directly through the passage section 73 of the insert and from there to the second portion 9 of the filtration chamber 3 inside the mechanical filter 41, where the fluid is filtered by the magnetic filter 50;
- the fluid flows out, through the mechanical filter 41, from the second portion 9 of the filtration chamber and passes into the first portion 8 of the filtration chamber, and from there it is conveyed through the first side 74 of the insert towards the second opening 20, the fluid not being able to pass through the passage section again because of the partition of the first side of the insert and the diverting portion 22 of the dividing wall.

The second operative configuration is shown in figure 13; in this configuration:
- the first inlet/outlet opening 10 is intended to be set into communication with a line coming from a plumbing and heating system, particularly a heating water return line from a system of heating elements (for example heaters or radiators), so as to receive a flow of water to be subjected to filtration;
- the second inlet/outlet opening (20) is intercepted by the closure element 4;
- the third inlet/outlet opening 30 is intended to be set into communication with a line directed to a boiler of the plumbing and heating system, so as to send thereto the flow of water following filtration;
- the flow-directing insert 70 is in the first position for use;
- via the second side 77 of the insert, and in particular the separation portion 78 of the second side, and via the outside of the dividing wall 21, the flow of fluid entering the first opening 10 is conveyed directly through the passage section 73 of the insert and from there to the second portion 9 of the filtration chamber 3 inside the mechanical filter 41, where the fluid is filtered by the magnetic filter 50;
- the fluid flows out, through the mechanical filter 41, from the second portion 9 of the filtration chamber and passes into the first portion 8 of the filtration chamber, and from there it is conveyed through the first side 74 of the insert towards the third opening 30, the fluid not being able to pass through the passage section 73 again because of the partition 76 of the first side 74 of the insert 70 and the diverting portion 22 of the dividing wall 21.

The third operative configuration is shown in figure 14; in this configuration:
- the third inlet/outlet opening 30 is intended to be set into communication with a line coming from a plumbing and heating system, particularly a heating water return line from a system of heating elements (for example heaters or radiators), so as to receive a flow of water to be subjected to filtration;
- the second inlet/outlet opening 20 is intercepted by the closure element 4;
- the first inlet/outlet opening 10 is intended to be set into communication with a line directed to a boiler of the plumbing and heating system, so as to send thereto the flow of water following filtration;
- the flow-directing insert 70 is in the second position for use;
- via the second side 77 of the insert, and in particular the separation portion 78 of the second side, the flow of fluid entering the third opening 30 is conveyed directly through the passage section 73 of the insert and from there to the second portion 9 of the filtration chamber 3 inside the mechanical filter 41, where the fluid is filtered by the magnetic filter 50;
- the fluid flows out, through the mechanical filter 41, from the second portion 9 of the filtration chamber and passes into the first portion 8 of the filtration chamber, and from there it is conveyed through the first side 74 of the insert towards the first opening 10, the fluid not being able to pass through the passage section 73 again because of the raised edge 75 of the first side 74 of the insert and the outside of the dividing wall 21.

The fourth operative configuration is shown in figure 15; in this configuration:
- the second inlet/outlet opening 20 is intended to be set into communication with a line coming from a plumbing and heating system, particularly a heating water return line from a system of heating elements (for example heaters or radiators), so as to receive a flow of water to be subjected to filtration;
- the third inlet/outlet opening 30 is intercepted by the closure element 4;
- the first inlet/outlet opening 10 is intended to be set into communication with a line directed to a boiler of the plumbing and heating system, so as to send thereto the flow of water following filtration;
- the flow-directing insert 70 is in the second position for use;
- via the second side 77 of the insert, and in particular thanks to the separation portion 78 of the second side, the flow of fluid entering the second opening 20 is conveyed directly through the passage section 73 of the insert and from there to the second portion 9 of the filtration chamber 3 inside the mechanical filter 41, where the fluid is filtered by the magnetic filter 50;
- the fluid flows out, through the mechanical filter 41, from the second portion 9 of the filtration chamber and passes into the first portion 8 of the filtration chamber, and from there it is conveyed through the first side 74 of the insert towards the first opening 10, the fluid not being able to pass through the passage section 73 again because of the raised edge 75 of the first side 74 of the insert and the outside of the dividing wall 21.

Preferably:
- in the first operative configuration, in the second operative configuration and in the third operative configuration the device is positioned vertically, i.e. with the longitudinal axis 2A of the body 2 of the device vertically oriented;
- in the fourth operative configuration the device is positioned horizontally, i.e. with the longitudinal axis 2A of the body 2 of the device horizontally oriented.

Observe, in figures 12-15, the arrows indicating the path of the fluid inside the device. In particular:
- in the first configuration (figure 12) the fluid enters from the first opening 10, flows down into the mechanical filter, is magnetically filtered, passes radially outside the mechanical filter (and is mechanically filtered) and flows back up until exiting from the second opening 20 (the third one is closed); the impurities and residue from the mechanical filtration remain in the second portion of the filtration chamber;
- in the second configuration (figure 13) the fluid enters from the first opening 10, flows down into the mechanical filter, is magnetically filtered, passes radially outside the mechanical filter (and is mechanically filtered) and flows back up until exiting from the third opening (the second one is closed); the impurities and residue from the mechanical filtration remain in the second portion of the filtration chamber. If the boiler is situated above the device, it is possible to connect an angular coupling (90°) to the outside of the third opening in order to go up towards the boiler.
- in the third configuration (figure 14) the fluid enters from the third opening 30, flows down into the mechanical filter, is magnetically filtered, passes radially outside the mechanical filter (and is mechanically filtered) and flows back up until exiting from the first opening (the second one is closed); the impurities and residue from the mechanical filtration remain in the second portion of the filtration chamber. If the boiler is situated above the device, it is possible to connect an angular coupling (90°) to the outside of the first opening in order to go up towards the boiler.
- in the fourth configuration (figure 15) the fluid enters from the second opening 20, passes horizontally directly into the mechanical filter, is magnetically filtered, passes to the outside of the mechanical filter (and is mechanically filtered) and flows back up until exiting from the first opening (the third one is closed); the impurities and residue from the mechanical filtration remain in the second portion of the filtration chamber.

Essentially, in the third configuration the path of the fluid is opposite that of the second configuration, whereas in the fourth configuration the path of the fluid is opposite that of the first configuration.

It should be noted that in all four operative configurations, as represented, the opening that acts as an inlet for the fluid is horizontal, since it is intended to be connected to the return line from the system, which usually comes out of a wall under the boiler. In any case, the first, second and third configurations can also operate horizontally, and the fourth can also operate vertically. In this case it is possible to use suitable couplings, of a known type, to make the water connections between the openings acting as an inlet and outlet of the device and the pipes of the system to which they are to be connected.

It should be noted, furthermore, that the paths of the fluid inside the device, in the four configurations, are obligatory thanks to the flow-directing insert and thanks to the structure and positioning of the elements inside the filtration chamber.

In a possible alternative embodiment, not shown, the first inlet/outlet opening 10 and the third inlet/outlet opening 30 are not aligned with each other, that is, the respective central axes 10A and 30A of the first inlet/outlet opening 10 and of the third inlet/outlet opening 30 do not coincide with each other, but are rather offset. This means that the first inlet/outlet opening 10 and the third inlet/outlet opening 30 are positioned, on the external lateral surface 6 of the body 2, at different heights with respect to the second opening 20 along the longitudinal axis. This makes it possible to have two different longitudinal distances, or distances between centres, between the first opening 10 and the second opening 20 and between the third opening 30 and the second opening 20. In this manner it is possible, advantageously, to select which opening to use as an inlet or as an outlet, either the first opening 10 or the third opening 30, simply by rotating the entire body of the device by 180°.

This can be useful based on the position of the return pipe of the system (to which the device inlet is to be connected) and of the pipe leading back into the boiler (to which the device outlet is to be connected), in particular when operating in the fourth configuration. In such a case, for example, based on the distance of the pipe delivering into the boiler from the wall of installation, it may be useful to select either the first or the third inlet opening as the fluid outlet of the device.

In general, irrespective of the operative configuration selected, the device 1 is usually directly supported by the two lines of the system on which it is installed (or on which the openings acting as inlet and outlet are installed).

The method for filtering a fluid circulating in a plumbing and heating system according to the present invention corresponds to the operating mode of the device 1. Essentially, the method comprises:
- arranging a device 1 according to what has been described;
- identifying a line coming from the plumbing and heating system, particularly a heating water return line from a system of heating elements, carrying a flow of water to be subjected to filtration;
- identifying a line directed to a boiler of the plumbing and heating system, this line carrying a flow of water that has undergone filtration;
- operating the device selectively in one of the aforesaid operative configurations.

The invention thus conceived is susceptible of numerous modifications and variants, all falling within the scope of the inventive concept, and the components mentioned may be replaced by other technically equivalent elements.

The invention achieves important advantages. First of all, as emerges clearly from the above description, the invention enables at least some of the drawbacks of the prior art to be overcome.

The device of the present invention enables an effective filtration of a fluid circulating in a plumbing and heating system, and achieving it in every operative configuration. In particular, irrespective of which opening acts as an inlet and which as an outlet, the filtration of the fluid is always optimal. In fact, as amply explained above and illustrated in figures 12-15, in every operative configuration the entire flow of fluid is effectively subjected both to mechanical filtration and to magnetic filtration, without any portion of fluid passing through the device without being completely filtered, as occurs, by contrast, in the solutions of a known type. Therefore, the device of the present invention combines versatility of use, as three inlet/outlet openings are available, and the possibility of deciding which one will act as an inlet for the fluid and which one as an outlet, with maximum efficiency in terms of filtration in every operative configuration.

This allows the device to be adapted to a large number and different types of boilers or other components of a heating system and to be able to be installed even in very limited spaces, while at the same time effectively performing the required filtering operations.

In short, the device of the present invention is capable of operating with consistent high performances irrespective of the mode of installation inside a plumbing and heating system

This is made possible, in particular, thanks to the flow-directing insert, which enables the fluid to be directed in such a manner that it always (i.e. in every operative configuration) flows first inside the mechanical filter (where the magnetic filter is also present) and then, after passing through it, outside of it: this makes the filtration always optimal, overcoming the problems of the prior art.

The path of the fluid in the filtration chamber, always first through the second portion and then through the first one, i.e. always according to an inside-outside scheme with respect to the filtering members, makes it possible to always obtain an effective double filtration.

The two sides of the flow-directing insert are in fact designed to manage, with a single component, four different configurations: once the inlet opening and the outlet opening have been selected (and the remaining opening has been closed), it is sufficient to position the insert in the first or second position for use (by simply rotating the same) and the device will be ready to operate.

Furthermore, the device of the present invention is characterised by high operating reliability and a lower predisposition to faults and malfunctions and it can be assembled, disassembled, cleaned and maintained in a simple and rapid manner.

Finally, the device of the present invention is characterised by a competitive cost and a simple, rational structure.

## Claims

1. A device (1) for filtering a fluid circulating in a plumbing and heating system, said device (1) comprising a body (2) of the device which defines therewithin a filtration chamber (3) that is destined to have a fluid to be subjected to filtration pass through it, said body being provided with:
- a first inlet/outlet opening (10), which sets said filtration chamber (3) in communication with the outside of the device and that is configured to be associated with a line so as to receive therefrom, or to send thereto, fluid incoming to, or exiting from, said body of the device;
- a second inlet/outlet opening (20), which sets said filtration chamber (3) in communication with the outside of the device and that is configured to be associated with a respective line so as to receive therefrom, or to send thereto, fluid incoming to, or exiting from, said body of the device;
- a third inlet/outlet opening (30), which sets said filtration chamber (3) in communication with the outside of the device and that is configured to be associated with a respective line so as to receive therefrom, or to send thereto, fluid incoming to, or exiting from, said body of the device;
the device being configured to operate a passage of fluid through said filtration chamber (3), in a selective manner according to a plurality of operative configurations, from one opening among said first inlet/outlet opening (10), said second inlet/outlet opening (20), and said third inlet/outlet opening (30) to another opening among said first inlet/outlet opening (10), said second inlet/outlet opening (20), and said third inlet/outlet opening (30),
the device further comprising:
- filtering members (40) that are at least partially housed inside said filtration chamber (3), or associated with said body (2) of the device, and operatively interposed between said first inlet/outlet opening, said second inlet/outlet opening and said third inlet/outlet opening to carry out filtering of the fluid passing through the filtration chamber;
- a flow-directing insert (70) that is housed inside said filtration chamber (3) and configured to channel the fluid passing through the filtration chamber, in each one of said plurality of operative configurations, so that the fluid passes at least partially through said filtering members (40);
the device (1) being **characterized in that** said flow-directing insert (70) is configured to operate selectively at least in either:
- a first position for use, in which it channels the fluid circulating inside the filtration chamber (3) so as to prevent direct passage of the fluid from the first opening (10) to the second opening (20) or from the first opening (10) to the third opening (30) without passing through the filtering members (40); or
- a second position for use, in which it channels the fluid circulating inside the filtration chamber (3) so as to prevent direct passage of the fluid from the second opening (20) to the first opening (10) or from the third opening (30) to the first opening (10) without passing through the filtering members (40).

2. The device (1) according to claim 1, comprising a closure element (4) that is configured to selectively intercept one opening among said first inlet/outlet opening (10), said second inlet/outlet opening (20), and said third inlet/outlet opening (30), and wherein said plurality of operative configurations comprise at least:
- a first operative configuration, in which said first opening (10) receives a flow of fluid incoming to the device, said second opening (20) sends the flow of filtered fluid exiting from the device and said third opening (30) is intercepted by said closure element;
- a second operative configuration, in which said first opening (10) receives a flow of fluid incoming to the device, said third opening (30) sends the flow of filtered fluid exiting from the device and said second opening (20) is intercepted by said closure element;
- a third operative configuration, in which said third opening (30) receives a flow of fluid incoming to the device, said first opening (10) sends the flow of filtered fluid exiting from the device and said second opening (20) is intercepted by said closure element;
- a fourth operative configuration, in which said second opening (20) receives a flow of fluid incoming to the device, said first opening (10) sends the flow of filtered fluid exiting from the device and said third opening (30) is intercepted by said closure element.

3. The device (1) according to any one of the preceding claims, wherein said flow-directing insert (70) is configured to be selectively positioned:
- in said first position for use, when the device is operating in said first operative configuration or in said second operative configuration;
- in said second position for use, when the device is operating in said third operative configuration or in said fourth operative configuration.

4. The device (1) according to any one of the preceding claims, wherein the flow-directing insert (70) has a central axis (71), an external wall (72) extending about said central axis and a passage section (73) inside the external wall and perpendicular to the central axis, the insert (70) having two opposite sides (74, 77) with respect to the central axis, wherein:
- a first side (74) is provided, on the external wall (72), with an edge (75) that is raised with respect to the passage section (73), and a partition (76) that intercepts said passage section (73);
- a second side (77) lacks a raised edge on the external wall and it lacks a partition on the passage section, thus enabling the passage of fluid through the passage section, and it is provided with a separation portion (78) emerging radially from the external wall (72), away from the central axis (71), and substantially aligned with the passage section (73).

5. The device (1) according to the preceding claim, wherein the insert (70) is structured in such a manner that:
- the second side (77) enables the passage of fluid, coming from the outside of the insert, through the passage section (73), along a first direction along said central axis (71);
- the first side (74) obstructs the passage of fluid, coming from the outside of the insert, through the passage section (73), and determines a process of directing it along a second direction along said central axis (71), opposite said first direction.

6. The device (1) according to any one of the preceding claims, wherein said first side (74) and said second side (77) constitute two halves of said insert (70) which face each other and are connected along a dividing plane (79) in which the central axis (71) of the insert lies, and wherein the insert (70) is symmetric with respect to a plane of symmetry in which the central axis of the insert lies, and perpendicular to said dividing plane.

7. The device (1) according to any one of the preceding claims, wherein:
- in said first position for use, the insert (70) is positioned in such a manner that the first side (74) thereof faces the third inlet/outlet opening (30) and the second side (77) thereof faces the first inlet/outlet opening (10);
- in said second position for use, the insert (70) is positioned in such a manner that the first side (74) thereof faces the first inlet/outlet opening (10) and the second side (77) thereof faces the third inlet/outlet opening (30).

8. The device (1) according to any one of the preceding claims, wherein the body (2) of the device has a substantially cylindrical shape and it has a longitudinal axis (2A), an upper surface (5), an external lateral surface (6) and a lower surface (7), and wherein the first inlet/outlet opening (10) and the third inlet/outlet opening (30) are located on the external lateral surface (6) of the body of the device and on opposite sides with respect to the filtration chamber (3), and wherein the second inlet/outlet opening (20) is located on the upper surface (5) of the body of the device, and wherein the first inlet/outlet opening (10), the second inlet/outlet opening (20) and the third inlet/outlet opening (30) have a circular section and each one of said openings (10, 20, 30) has a respective central axis, and/or wherein the central axis of the second inlet/outlet opening (20) coincides with the longitudinal axis (2A) of the body (2) of the device, and/or wherein the central axis (71) of the insert (70) coincides with the longitudinal axis (2A) of the body (2) of the device and with the respective central axis of the second inlet/outlet opening (20).

9. The device (1) according to any one of the preceding claims, wherein the flow-directing insert (70) is located inside the filtration chamber (3) in such a manner as to surround the second inlet/outlet opening (20), and wherein the filtration chamber (3) is delimited laterally by a lateral surface (3A), above by a top surface (3B) and below by a bottom surface (3C) of the body (2) of the device, and/or wherein the second inlet/outlet opening (20) is provided with a dividing wall (21) extending inside the filtration chamber (3) and located between the longitudinal axis (2A) of the body of the device and the first inlet/outlet opening (10), and/or wherein said dividing wall (21) extends, starting from the second inlet/outlet opening (20), inside the filtration chamber (3) along a direction parallel to the longitudinal axis (2A) of the body of the device and substantially to a height (Q) coinciding with the dimensions of the first inlet/outlet opening (10) on the external lateral surface (6) of the body (2) of the device, and/or wherein the dividing wall (21) ends below with a portion for diverting (22) the fluid and that extends towards the longitudinal axis (2A) of the body (2) of the device.

10. The device (1) according to any one of the preceding claims, wherein the insert (70) is located, inside the filtration chamber (3), in such a manner that its external wall (72) externally surrounds the diverting portion (22) of the dividing wall (21), and/or wherein the diverting portion (22) of the dividing wall (21) is complementarily shaped with respect to the partition (76) of the first side (74) of the insert (70), and/or wherein the positioning of the insert (70) and the diverting portion (22) of the dividing wall (21) with respect to each other is such as to determine that:
- when the insert (70) is selectively set into said first position for use, the first side (74) of the insert proves to be on the side opposite the diverting portion (22) with respect to the longitudinal axis (2A) of the body, and facing it, so that the partition (76) and the diverting portion (22) completely intercept the passage section (73) of the insert (70), preventing the passage of fluid through the passage section;
- when the insert (70) is selectively set into said second position for use, the first side (74) of the insert is found on the same side as the diverting portion (22), with respect to the longitudinal axis (2A) of the body, and externally embraces the diverting portion (22), whereas the second side (77) of the insert is on the side opposite the diverting portion (22) with respect to the longitudinal axis (2A) of the body, and as the second side (77) lacks a partition, it enables the passage of fluid through the passage section (73),
and/or wherein, when the insert (70) is selectively set into said first position for use, surface continuity is created between the partition (76) and the diverting portion (22) and it is such as to completely intercept the passage section (73) of the insert, and/or wherein passage of the insert (70) between the first position for use and the second position for use takes place by means of a rotation, preferably of 180°, of the insert about its own central axis (71), and/or wherein the partition (76) of the insert (70) substantially has the shape of a portion of a spherical crown, or a portion of a spherical shell, and the diverting portion (22) of the dividing wall (21) substantially has a respective shape of a portion of a spherical crown, or a portion of a spherical shell.

11. The device (1) according to any one of the preceding claims, wherein the filtering members (40) comprise a mechanical filter (41) configured to separate substances and solid particles present in the fluid to be treated from the fluid itself in which they are suspended, the mechanical filter (41) having a structure provided with a plurality of passages (42) that have a given filtering section, so that the passage of the fluid from one internal side (44) of the mechanical filter to an external side (43) of the mechanical filter determines retention, on the internal side (44), of the substances and particles present in the fluid and having dimensions greater than said filtering section, and/or wherein the mechanical filter (41) has a cylindrical shape extending along a central axis (45) between a first end (46) and a second end (47), and it is positioned inside the filtration chamber (3) in such a manner that said central axis (45) coincides with the longitudinal axis (2A) of the body (2) of the device, and/or wherein the mechanical filter (41) has a smaller radial dimension with respect to the radial dimension of the filtration chamber (3), so as to be distanced from the lateral surface (3A) of the chamber (3) and define, inside the chamber, a first chamber portion (8) outside the mechanical filter (41) and a second chamber portion (9) inside the mechanical filter (41), and/or wherein the mechanical filter (41) is positioned axially between the bottom surface (3C) of the body (2) of the device and the flow-directing insert (70), and/or wherein the mechanical filter (41) is positioned in the chamber under the insert (70) so as to be in fluid communication with the three inlet/outlet openings (10, 20, 30), but under them along the longitudinal axis (2A) of the body (2) of the device, in a direction away from the second inlet/outlet opening (20).

12. The device (1) according to any one of the preceding claims, wherein the filtering members (40) comprise a magnetic filter (50) associated with the body (2) of the device and configured to collect and retain substances and particles having ferromagnetic properties and that are present in the fluid to be treated, in such a manner as to separate them from the fluid passing through the device, and/or wherein the body (2) of the device comprises a hollow protuberance (51) that emerges axially, in the filtration chamber, from said bottom surface (3C) towards said top surface (3B), said hollow protuberance (51) defining, outside the body (2) of the device, a housing (52) that is elongated in shape, corresponding to the hollow protuberance (51) and accessible from the lower surface (7), and/or wherein the magnetic filter (50) comprises at least one magnetic element (53) that is configured to generate a permanent magnetic field and inserted in said housing (52) of the body (2) in such a manner as to act upon the fluid passing through the filtration chamber (3) and retain the ferromagnetic substances and particles present in the fluid on the surface of said hollow protuberance (51) inside the body of the device, and/or wherein said hollow protuberance (51) emerging from the bottom surface (3C) is entirely contained inside the mechanical filter (41), so that the magnetic filter (50) is positioned inside said second portion (9) of the filtration chamber (3).

13. The device (1) according to any one of the preceding claims, said device (1) being configured to operate selectively, when in use, in one of the following operative configurations:
- a first operative configuration, in which:
- the first inlet/outlet opening (10) is destined to be set into communication with a line coming from a plumbing and heating system, particularly a heating water return line from a system of heating elements, so as to receive a flow of water to be subjected to filtration;
- the second inlet/outlet opening (20) is destined to be set into communication with a line directed to a boiler of the plumbing and heating system, so as to send thereto the flow of water following filtration;
- the third inlet/outlet opening (30) is intercepted by a closure element (4);
- the flow-directing insert (70) is in said first position for use;
- via the second side (77) of the insert, and via the outside of the dividing wall (21), the flow of fluid incoming to the first opening (10) is conveyed directly through the passage section (73) of the insert and from there to the second portion (9) of the filtration chamber (3) inside the mechanical filter (41), where the fluid is filtered by the magnetic filter (50);
- the fluid flows, through the mechanical filter (41), out from the second portion (9) of the filtration chamber, and passes into the first portion (8) of the filtration chamber (3), and from there it is conveyed through the first side (74) of the insert (70) on towards the second opening (20), the fluid not being able to pass through the passage section (73) again because of the partition (76) of the first side (74) of the insert (74) and the diverting portion (22) of the dividing wall (21);
- a second operative configuration, in which:
- the first inlet/outlet opening (10) is destined to be set into communication with a line coming from a plumbing and heating system, particularly a heating water return line from a system of heating elements, so as to receive a flow of water to be subjected to filtration;
- the second inlet/outlet opening (20) is intercepted by a closure element (4);
- the third inlet/outlet opening (30) is destined to be set into communication with a line directed to a boiler of the plumbing and heating system, so as to send thereto the flow of water following filtration;
- the flow-directing insert (70) is in said first position for use;
- via the second side (77) of the insert, and via the outside of the dividing wall (21), the flow of fluid incoming to the first opening (10) is conveyed directly through the passage section (73) of the insert and from there to the second portion (9) of the filtration chamber (3) inside the mechanical filter (41), where the fluid is filtered by the magnetic filter (50);
- the fluid flows, through the mechanical filter (41), out from the second portion (9) of the filtration chamber, and passes into the first portion (8) of the filtration chamber (3), and from there it is conveyed through the first side (74) of the insert (70) on towards the third opening (30), the fluid not being able to pass through the passage section (73) again because of the partition (76) of the first side (74) of the insert and the diverting portion (22) of the dividing wall (21);
- a third operative configuration, in which:
- the third inlet/outlet opening (30) is destined to be set into communication with a line coming from a plumbing and heating system, particularly a heating water return line from a system of heating elements, so as to receive a flow of water to be subjected to filtration;
- the second inlet/outlet opening (20) is intercepted by a closure element (4);
- the first inlet/outlet opening (10) is destined to be set into communication with a line directed to a boiler of the plumbing and heating system, so as to send thereto the flow of water following filtration;
- the flow-directing insert (70) is in said second position for use;
- via the second side (77) of the insert, the flow of fluid incoming to the third opening (10) is conveyed directly through the passage section (73) of the insert and from there to the second portion (9) of the filtration chamber (3) inside the mechanical filter (41), where the fluid is filtered by the magnetic filter (50);
- the fluid flows, through the mechanical filter (41), out from the second portion (9) of the filtration chamber, and passes into the first portion (8) of the filtration chamber (3), and from there it is conveyed through the first side (74) of the insert (70) on towards the first opening (10), the fluid not being able to pass through the passage section (73) again because of the raised edge (75) of the first side (74) of the insert and the outside of the dividing wall (21);
- a fourth operative configuration, in which:
- the second inlet/outlet opening (20) is destined to be set into communication with a line coming from a plumbing and heating system, particularly a heating water return line from a system of heating elements, so as to receive a flow of water to be subjected to filtration;
- the third inlet/outlet opening (30) is intercepted by a closure element (4);
- the first inlet/outlet opening (10) is destined to be set into communication with a line directed to a boiler of the plumbing and heating system, so as to send thereto the flow of water following filtration;
- the flow-directing insert (70) is in said second position for use;
- via the second side (77) of the insert (70), the flow of fluid incoming to the second opening (20) is conveyed directly through the passage section (73) of the insert and from there to the second portion (9) of the filtration chamber (3) inside the mechanical filter (41), where the fluid is filtered by the magnetic filter (50);
- the fluid flows, through the mechanical filter (41), out from the second portion (9) of the filtration chamber, and passes into the first portion (8) of the filtration chamber (3), and from there it is conveyed through the first side (74) of the insert (70) on towards the first opening (10), the fluid not being able to pass through the passage section (73) again because of the raised edge (75) of the first side (74) of the insert and the outside of the dividing wall (21).

14. A method for filtering a fluid circulating in a plumbing and heating system, said method comprising the steps of:
- arranging at least one device (1) for filtering a fluid according to any one of the preceding claims;
- identifying a line coming from a plumbing and heating system, particularly a heating water return line from a system of heating elements, carrying a flow of water to be subjected to filtration;
- identifying a line directed to a boiler of the plumbing and heating system, this line carrying a flow of water that has undergone filtration to the boiler;
- operating the device (1) selectively in one of said operative configurations.

## Patentansprüche

1. Vorrichtung (1) zum Filtern eines Fluids, welches in einem Sanitär-und-Heizsystem zirkuliert, wobei die Vorrichtung (1) einen Körper (2) der Vorrichtung umfasst, welcher darin eine Filterkammer (3) definiert, welche dazu bestimmt ist, ein einer Filtration auszusetzendes Fluid aufzuweisen, welches dorthindurch läuft, wobei der Körper mit folgendem bereitgestellt ist:
- einer ersten Einlass-/Auslassöffnung (10), welche die Filterkammer (3) in Kommunikation mit dem Äußeren der Vorrichtung setzt und welche dazu eingerichtet ist, einer Leitung zugeordnet zu sein, um davon ein Fluid zu empfangen oder an diese zu senden, welches in den Körper der Vorrichtung eintritt oder aus diesem austritt;
- einer zweiten Einlass-/Auslassöffnung (20), welche die Filterkammer (3) in Kommunikation mit dem Äußeren der Vorrichtung setzt und welche dazu eingerichtet ist, einer entsprechenden Leitung zugeordnet zu sein, um davon ein Fluid zu empfangen oder an diese zu senden, welches in den Körper der Vorrichtung eintritt oder aus diesem austritt;
- einer dritten Einlass-/Auslassöffnung (30), welche die Filterkammer (3) in Kommunikation mit dem Äußeren der Vorrichtung setzt und welche dazu eingerichtet ist, einer entsprechenden Leitung zugeordnet zu sein, um davon ein Fluid zu empfangen oder an diese zu senden, welches in den Körper der Vorrichtung eintritt oder aus diesem austritt;
wobei die Vorrichtung dazu eingerichtet ist, einen Durchgang von Fluid durch die Filterkammer (3) in einer selektiven Weise gemäß einer Mehrzahl von Betriebskonfigurationen von einer Öffnung unter der ersten Einlass-/Auslassöffnung (10), der zweiten Einlass-/Auslassöffnung (20) und der dritten Einlass-/Auslassöffnung (30) zu einer anderen Öffnung unter der ersten Einlass-/Auslassöffnung (10), der zweiten Einlass-/Auslassöffnung (20) und der dritten Einlass-/Auslassöffnung (30) zu betreiben,
wobei die Vorrichtung ferner umfasst:
- Filterelemente (40), welche wenigstens teilweise innerhalb der Filterkammer (3) aufgenommen sind oder dem Körper (2) der Vorrichtung zugeordnet sind und betriebsmäßig zwischen der ersten Einlass-/Auslassöffnung, der zweiten Einlass-/Auslassöffnung und der dritten Einlass-/Auslassöffnung eingefügt sind, um ein Filtern des Fluids auszuführen, welches durch die Filterkammer läuft;
- einen Strömungsleiteinsatz (70), welcher innerhalb der Filterkammer (3) aufgenommen ist und dazu eingerichtet ist, das Fluid zu lenken, welches durch die Filterkammer hindurch läuft, in jeder der Mehrzahl von Betriebskonfigurationen, so dass das Fluid wenigstens teilweise durch die Filterelemente (40) hindurch läuft; wobei die Vorrichtung (1) **dadurch gekennzeichnet ist, dass** der Strömungsleiteinsatz (70) dazu eingerichtet ist, wahlweise betrieben zu werden in wenigstens entweder:
- einer ersten Position für eine Verwendung, in welcher er das innerhalb der Filterkammer (3) zirkulierende Fluid lenkt, so dass ein direkter Durchgang des Fluids von der ersten Öffnung (10) zu der zweiten Öffnung (20) oder von der ersten Öffnung (10) zu der dritten Öffnung (30), ohne durch die Filterelemente (40) zu laufen, verhindert wird; oder
- einer zweiten Position für eine Verwendung, in welcher er das innerhalb der Filterkammer (3) zirkulierende Fluid lenkt, so dass ein direkter Durchgang des Fluids von der zweiten Öffnung (20) zu der ersten Öffnung (10) oder von der dritten Öffnung (30) zu der ersten Öffnung (10), ohne durch die Filterelemente (40) zu laufen, verhindert wird.

2. Vorrichtung (1) nach Anspruch 1, umfassend ein Verschlusselement (4), welches dazu eingerichtet ist, wahlweise eine Öffnung unter der ersten Einlass-/Auslassöffnung (10), der zweiten Einlass-/Auslassöffnung (20) und der dritten Einlass-/Auslassöffnung (30) zu unterbrechen, und wobei die Mehrzahl von Betriebskonfigurationen wenigstens umfasst:
- eine erste Betriebskonfiguration, in welcher die erste Öffnung (10) eine Strömung von Fluid empfängt, welches in die Vorrichtung eintritt, die zweite Öffnung (20) die Strömung gefilterten Fluids sendet, welches aus der Vorrichtung austritt, und die dritte Öffnung (30) durch das Verschlusselement unterbrochen ist;
- eine zweite Betriebskonfiguration, in welcher die erste Öffnung (10) eine Strömung von Fluid empfängt, welches in die Vorrichtung eintritt, die dritte Öffnung (30) die Strömung gefilterten Fluids sendet, welches aus der Vorrichtung austritt, und die zweite Öffnung (20) durch das Verschlusselement unterbrochen ist;
- eine dritte Betriebskonfiguration, in welcher die dritte Öffnung (30) eine Strömung von Fluid empfängt, welches in die Vorrichtung eintritt, die erste Öffnung (10) die Strömung gefilterten Fluids sendet, welches aus der Vorrichtung austritt, und die zweite Öffnung (20) durch das Verschlusselement unterbrochen ist;
- eine vierte Betriebskonfiguration, in welcher die zweite Öffnung (20) eine Strömung von Fluid empfängt, welches in die Vorrichtung eintritt, die erste Öffnung (10) die Strömung gefilterten Fluids sendet, welches aus der Vorrichtung austritt, und die dritte Öffnung (30) durch das Verschlusselement unterbrochen ist.

3. Vorrichtung (1) nach einem der vorhergehenden Ansprüche, wobei der Strömungsleiteinsatz (70) dazu eingerichtet ist, selektiv positioniert zu sein:
- in der ersten Position für eine Verwendung, wenn die Vorrichtung in der ersten Betriebskonfiguration oder in der zweiten Betriebskonfiguration betrieben wird;
- in der zweiten Position für eine Verwendung, wenn die Vorrichtung in der dritten Betriebskonfiguration oder in der vierten Betriebskonfiguration betrieben wird.

4. Vorrichtung (1) nach einem der vorhergehenden Ansprüche, wobei der Strömungsleiteinsatz (70) eine zentrale Achse (71), eine externe Wand (72), welche sich um die zentrale Achse erstreckt, und einen Durchgangsabschnitt (73) innerhalb der externen Wand und senkrecht zu der zentralen Achse aufweist, wobei der Einsatz (70) zwei entgegengesetzte Seiten (74, 77) in Bezug auf die zentrale Achse aufweist, wobei:
- eine erste Seite (74) an der externen Wand (72) mit einem Rand (75), welcher in Bezug auf den Durchgangsabschnitt erhöht ist, und einem Unterteilungselement (76) bereitgestellt ist, welches den Durchgangsabschnitt (73) unterbricht;
- einer zweiten Seite (77) ein erhöhter Rand an der externen Wand fehlt und ein Unterteilungselement an dem Durchgangsabschnitt fehlt, wodurch der Durchgang von Fluid durch den Durchgangsabschnitt ermöglicht ist, und diese mit einem Trennabschnitt (78) bereitgestellt ist, welcher radial von der externen Wand (72) weg von der zentralen Achse (71) hervortritt und im Wesentlichen mit dem Durchgangsabschnitt (73) ausgerichtet ist.

5. Vorrichtung (1) nach dem vorhergehenden Anspruch, wobei der Einsatz (70) in einer solchen Weise strukturiert ist, dass:
- die zweite Seite (77) den Durchgang von Fluid, welches von dem Äußeren des Einsatzes kommt, durch den Durchgangsabschnitt (73) entlang einer ersten Richtung entlang der zentralen Achse (71) erlaubt;
- die erste Seite (74) den Durchgang von Fluid, welches von dem Äußeren des Einsatzes kommt, durch den Durchgangsabschnitt (73) verhindert und einen Prozess eines Leitens des Fluids entlang einer zweiten Richtung entlang der zentralen Achse (71) bestimmt, welche der ersten Richtung entgegengesetzt ist.

6. Vorrichtung (1) nach einem der vorhergehenden Ansprüche, wobei die erste Seite (74) und die zweite Seite (77) zwei Hälften des Einsatzes (70) bilden, welche einander zugewandt sind und welche entlang einer Teilungsebene (79) verbunden sind, in welcher die zentrale Achse (71) des Einsatzes liegt, und wobei der Einsatz (70) symmetrisch in Bezug auf eine Symmetrieebene, in welcher die zentrale Achse des Einsatzes liegt, und senkrecht zu der Teilungsebene ist.

7. Vorrichtung (1) nach einem der vorhergehenden Ansprüche, wobei:
- in der ersten Position für eine Verwendung, der Einsatz (70) in einer solchen Weise positioniert ist, dass die erste Seite (74) davon der dritten Einlass-/Auslassöffnung (30) zugewandt ist und die zweite Seite (77) davon der ersten Einlass-/Auslassöffnung (10) zugewandt ist;
- in der zweiten Position für eine Verwendung, der Einsatz (70) in einer solchen Weise positioniert ist, dass die erste Seite (74) davon der ersten Einlass-/Auslassöffnung (10) zugewandt ist und die zweite Seite (77) davon der dritten Einlass-/Auslassöffnung (30) zugewandt ist.

8. Vorrichtung (1) nach einem der vorhergehenden Ansprüche, wobei der Körper (2) der Vorrichtung eine im Wesentlichen zylindrische Form aufweist und dieser eine longitudinale Achse (2A), eine obere Fläche (5), eine externe laterale Fläche (6) und eine untere Fläche (7) aufweist, und wobei die erste Einlass-/Auslassöffnung (10) und die dritte Einlass-/Auslassöffnung (30) an der externen lateralen Fläche (6) des Körpers der Vorrichtung und an entgegengesetzten Seiten in Bezug auf die Filterkammer (3) angeordnet sind, und wobei die zweite Einlass-/Auslassöffnung (20) an der oberen Fläche (5) des Körpers der Vorrichtung angeordnet ist, und wobei die erste Einlass-/Auslassöffnung (10), die zweite Einlass-/Auslassöffnung (20) und die dritte Einlass-/Auslassöffnung (30) einen kreisförmigen Querschnitt aufweisen und jede der Öffnungen (10, 20, 30) eine entsprechende zentrale Achse aufweist, und/oder wobei die zentrale Achse der zweiten Einlass-/Auslassöffnung (20) mit der longitudinalen Achse (2A) des Körpers (2) der Vorrichtung zusammenfällt, und/oder wobei die zentrale Achse (71) des Einsatzes (70) mit der longitudinalen Achse (2A) des Körpers (2) der Vorrichtung und mit der entsprechenden zentralen Achse der zweiten Einlass-/Auslassöffnung (20) zusammenfällt.

9. Vorrichtung (1) nach einem der vorhergehenden Ansprüche, wobei der Strömungsleiteinsatz (70) in einer derartigen Weise innerhalb der Filterkammer (3) angeordnet ist, dass er die zweite Einlass-/Auslassöffnung (20) umgibt, und wobei die Filterkammer (3) lateral durch eine laterale Fläche (3A), oben durch eine obere Fläche (3B) und unten durch eine untere Fläche (3C) des Körpers (2) der Vorrichtung begrenzt ist, und/oder wobei die zweite Einlass-/Auslassöffnung (20) mit einer Teilungswand (21) bereitgestellt ist, welche sich innerhalb der Filterkammer (3) erstreckt und zwischen der longitudinalen Achse (2A) des Körpers der Vorrichtung und der ersten Einlass-/Auslassöffnung (10) angeordnet ist, und/oder wobei sich die Teilungswand (21), ausgehend von der zweiten Einlass-/Auslassöffnung (20), innerhalb der Filterkammer (3) entlang einer Richtung, welche parallel zu der longitudinalen Achse (2A) des Körpers der Vorrichtung ist, und im Wesentlichen bis zu einer Höhe (Q) erstreckt, welche mit den Abmessungen der ersten Einlass-/Auslassöffnung (10) an der externen lateralen Fläche (6) des Körpers (2) der Vorrichtung zusammenfällt, und/oder wobei die Teilungswand (21) unten mit einem Abschnitt zum Umleiten (22) des Fluids endet, welcher sich in Richtung der longitudinalen Achse (2A) des Körpers (2) der Vorrichtung erstreckt.

10. Vorrichtung (1) nach einem der vorhergehenden Ansprüche, wobei der Einsatz (70) innerhalb der Filterkammer (3) in einer derartigen Weise angeordnet ist, dass seine externe Wand (72) extern den Umleitungsabschnitt (22) der Teilungswand (21) umgibt, und/oder wobei der Umleitungsabschnitt (22) der Teilungswand (21) in Bezug auf das Unterteilungselement (76) der ersten Seite (74) des Einsatzes (70) komplementär geformt ist, und/oder wobei das Positionieren des Einsatzes (70) und des Umleitungsabschnitts (22) der Teilungswand (21) in Bezug aufeinander derart ist, dass bestimmt wird, dass:
- wenn der Einsatz (70) wahlweise in die erste Position für eine Verwendung eingestellt ist, sich die erste Seite (74) des Einsatzes dazu erweist, auf der Seite zu sein, welche dem Umleitungsabschnitt (22) in Bezug auf die longitudinale Achse (2A) des Körpers entgegengesetzt ist, und dieser/diesem zugewandt ist, so dass das Unterteilungselement (76) und der Umleitungsabschnitt (22) den Durchgangsabschnitt (73) des Einsatzes (70) vollständig unterbrechen, wodurch der Durchgang von Fluid durch den Durchgangsabschnitt verhindert ist;
- wenn der Einsatz (70) wahlweise in die zweite Position für eine Verwendung eingestellt ist, sich die erste Seite (74) des Einsatzes auf der gleichen Seite wie der Umleitungsabschnitt (22) in Bezug auf die longitudinale Achse (2A) des Körpers befindet und den Umleitungsabschnitt (22) extern umspannt, während die zweite Seite (77) des Einsatzes auf der Seite ist, welche dem Umleitungsabschnitt (22) in Bezug auf die longitudinale Achse (2A) des Körpers entgegengesetzt ist, und da der zweiten Seite (77) ein Unterteilungselement fehlt, ermöglicht diese den Durchgang von Fluid durch den Durchgangsabschnitt (73),
und/oder wobei, wenn der Einsatz (70) wahlweise in die erste Position für eine Verwendung eingestellt ist, eine Flächenkontinuität zwischen dem Unterteilungselement (76) und dem Umleitungsabschnitt (22) erzeugt ist und diese derart ist, dass der Durchgangsabschnitt (73) des Einsatzes vollständig unterbrochen ist, und/oder wobei der Übergang des Einsatzes (70) zwischen der ersten Position für eine Verwendung und der zweiten Position für eine Verwendung mittels einer Rotation, vorzugsweise um 180°, des Einsatzes um seine eigene zentrale Achse (71) stattfindet, und/oder wobei das Unterteilungselement (76) des Einsatzes (70) im Wesentlichen die Form eines Abschnitts einer kugelförmigen Krone oder eines Abschnitts einer kugelförmigen Schale aufweist und der Umleitungsabschnitt (22) der Teilungswand (21) in Wesentlichen eine entsprechende Form eines Abschnitts einer kugelförmigen Krone oder eines Abschnitts einer kugelförmigen Schale aufweist.

11. Vorrichtung (1) nach einem der vorhergehenden Ansprüche, wobei die Filterelemente (40) einen mechanischen Filter (41) umfassen, welcher dazu eingerichtet ist, Substanzen und Feststoffpartikel, welche in dem zu behandelnden Fluid vorhanden sind, von dem Fluid selbst zu trennen, in welchem diese suspendiert sind, wobei der mechanische Filter (41) eine Struktur aufweist, welche mit einer Mehrzahl von Durchgängen (42) bereitgestellt ist, welche einen vorgegebenen Filterabschnitt aufweisen, so dass der Durchgang des Fluids von einer inneren Seite (44) des mechanischen Filters zu einer externen Seite (43) des mechanischen Filterns an der inneren Seite (44) ein Halten der Substanzen und Partikel bestimmt, welche in dem Fluid vorhanden sind und welche Abmessungen aufweisen, welche größer als der Filterabschnitt sind, und/oder wobei der mechanische Filter (41) eine zylindrische Form aufweist, welche sich entlang einer zentralen Achse (45) zwischen einem ersten Ende (46) und einem zweiten Ende (47) erstreckt, und dieser innerhalb der Filterkammer (3) in einer derartigen Weise positioniert ist, dass die zentrale Achse (45) mit der longitudinalen Achse (2A) des Körpers (2) der Vorrichtung zusammenfällt, und/oder wobei der mechanische Filter (41) eine kleinere radiale Abmessung in Bezug auf die radiale Abmessung der Filterkammer (3) aufweist, um von der lateralen Fläche (3A) der Kammer (3) beabstandet zu sein und innerhalb der Kammer einen ersten Kammerabschnitt (8) außerhalb des mechanischen Filters (41) und einen zweiten Kammerabschnitt (9) innerhalb des mechanischen Filters (41) zu definieren, und/oder wobei der mechanische Filter (41) axial zwischen der unteren Fläche (3C) des Körpers (2) der Vorrichtung und dem Strömungsleiteinsatz (70) positioniert ist, und/oder wobei der mechanische Filter (41) in der Kammer unter dem Einsatz (70) positioniert ist, um in Fluidkommunikation mit den drei Einlass-/Auslassöffnungen (10, 20, 30) zu stehen, jedoch unter diesen entlang der longitudinalen Achse (2A) des Körpers (2) der Vorrichtung in einer Richtung weg von der zweiten Einlass-/Auslassöffnung (20).

12. Vorrichtung (1) nach einem der vorhergehenden Ansprüche, wobei die Filterelemente (40) einen magnetischen Filter (50) umfassen, welcher dem Körper (2) der Vorrichtung zugeordnet ist und dazu eingerichtet ist, Substanzen und Partikel, welche ferromagnetische Eigenschaften aufweisen und welche in dem zu behandelnden Fluid vorhanden sind, in einer derartigen Weise zu sammeln und zu halten, dass diese von dem Fluid, welches durch die Vorrichtung läuft, getrennt werden, und/oder wobei der Körper (2) der Vorrichtung einen hohlen Vorsprung (51) umfasst, welcher in der Filterkammer von der unteren Fläche (3C) in Richtung der oberen Fläche (3B) axial hervortritt, wobei der hohle Vorsprung (51) außerhalb des Körpers (2) der Vorrichtung ein Gehäuse (52) definiert, welches eine längliche Form aufweist, dem hohlen Vorsprung (51) entsprechend und von der unteren Fläche (7) zugänglich, und/oder wobei der magnetische Filter (50) wenigstens ein magnetisches Element (53) umfasst, welches dazu eingerichtet ist, ein permanentes Magnetfeld zu erzeugen und welches in das Gehäuse (52) des Körpers (2) in einer derartigen Weise eingesetzt ist, dass es auf das Fluid wirkt, welches durch die Filterkammer (3) läuft, und die ferromagnetischen Substanzen und Partikel zu halten, welche in dem Fluid an der Fläche des hohlen Vorsprungs (51) innerhalb des Körpers der Vorrichtung vorhanden sind, und/oder wobei der hohle Vorsprung (51), welcher von der unteren Fläche (3C) hervortritt, vollständig innerhalb des mechanischen Filters (41) enthalten ist, so dass der magnetische Filter (50) innerhalb des zweiten Abschnitts (9) der Filterkammer (3) positioniert ist.

13. Vorrichtung (1) nach einem der vorhergehenden Ansprüche, wobei die Vorrichtung (1) dazu eingerichtet ist, bei Verwendung wahlweise in einer der folgenden Betriebskonfigurationen betrieben zu werden:
- einer ersten Betriebskonfiguration, in welcher:
- die erste Einlass-/Auslassöffnung (10), dazu bestimmt ist, in Kommunikation mit einer Leitung gesetzt zu sein, welche von einem Sanitär-und-Heizungssystem kommt, insbesondere einer Heizungswasser-Rückführungsleitung von einem System von Heizelementen, um eine Strömung von Wasser zu empfangen, welches einer Filtration auszusetzen ist;
- die zweite Einlass-/Auslassöffnung (20), dazu bestimmt ist, in Kommunikation mit einer Leitung gesetzt zu sein, welche auf einen Boiler des Sanitär-und-Heizungssystems gerichtet ist, um die Strömung von Wasser einer Filtration folgend dorthin zu senden;
- die dritte Einlass-/Auslassöffnung (30) durch ein Verschlusselement (4) unterbrochen ist;
- der Strömungsleiteinsatz (70) in der ersten Position für eine Verwendung ist;
- über die zweite Seite (77) des Einsatzes und über das Äußere der Teilungswand (21) die Strömung von Fluid, welches in die erste Öffnung (10) eintritt, direkt durch den Durchgangsabschnitt (73) des Einsatzes und von dort zu dem zweiten Abschnitt (9) der Filterkammer (3) innerhalb des mechanischen Filters (41) befördert wird, wo das Fluid durch den magnetischen Filter (50) gefiltert wird;
- das Fluid, durch den mechanischen Filter (41), aus dem zweiten Abschnitt (9) der Filterkammer herausströmt und in den ersten Abschnitt (8) der Filterkammer (3) läuft, und es von dort durch die erste Seite (74) des Einsatzes (70) weiter in Richtung der zweiten Öffnung (20) befördert wird, wobei das Fluid aufgrund des Unterteilungselements (76) der ersten Seite (74) des Einsatzes (74) und des Umleitungsabschnitts (22) der Teilungswand (21) nicht dazu in der Lage ist, nochmals durch den Durchgangsabschnitt (73) zu laufen;
- einer zweiten Betriebskonfiguration, in welcher:
- die erste Einlass-/Auslassöffnung (10), dazu bestimmt ist, in Kommunikation mit einer Leitung gesetzt zu sein, welche von einem Sanitär-und-Heizungssystem kommt, insbesondere einer Heizungswasser-Rückführungsleitung von einem System von Heizelementen, um eine Strömung von Wasser zu empfangen, welches einer Filtration auszusetzen ist;
- die zweite Einlass-/Auslassöffnung (20) durch ein Verschlusselement (4) unterbrochen ist;
- die dritte Einlass-/Auslassöffnung (30) dazu bestimmt ist, in Kommunikation mit einer Leitung gesetzt zu sein, welche auf einen Boiler des Sanitär-und-Heizungssystems gerichtet ist, um die Strömung von Wasser einer Filtration folgend dorthin zu senden;
- der Strömungsleiteinsatz (70) in der ersten Position für eine Verwendung ist;
- über die zweite Seite (77) des Einsatzes und über das Äußere der Teilungswand (21) die Strömung von Fluid, welches in die erste Öffnung (10) eintritt, direkt durch den Durchgangsabschnitt (73) des Einsatzes und von dort zu dem zweiten Abschnitt (9) der Filterkammer (3) innerhalb des mechanischen Filters (41) befördert wird, wo das Fluid durch den magnetischen Filter (50) gefiltert wird;
- das Fluid, durch den mechanischen Filter (41), aus dem zweiten Abschnitt (9) der Filterkammer herausströmt und in den ersten Abschnitt (8) der Filterkammer (3) läuft, und es von dort durch die erste Seite (74) des Einsatzes (70) weiter in Richtung der dritten Öffnung (30) befördert wird, wobei das Fluid aufgrund des Unterteilungselements (76) der ersten Seite (74) des Einsatzes und des Umleitungsabschnitts (22) der Teilungswand (21) nicht dazu in der Lage ist, nochmals durch den Durchgangsabschnitt (73) zu laufen;
- einer dritten Betriebskonfiguration, in welcher:
- die dritte Einlass-/Auslassöffnung (30), dazu bestimmt ist, in Kommunikation mit einer Leitung gesetzt zu sein, welche von einem Sanitär-und-Heizungssystem kommt, insbesondere einer Heizungswasser-Rückführungsleitung von einem System von Heizelementen, um eine Strömung von Wasser zu empfangen, welches einer Filtration auszusetzen ist;
- die zweite Einlass-/Auslassöffnung (20) durch ein Verschlusselement (4) unterbrochen ist;
- die erste Einlass-/Auslassöffnung (10) dazu bestimmt ist, in Kommunikation mit einer Leitung gesetzt zu sein, welche auf einen Boiler des Sanitär-und-Heizungssystems gerichtet ist, um die Strömung von Wasser einer Filtration folgend dorthin zu senden;
- der Strömungsleiteinsatz (70) in der zweiten Position für eine Verwendung ist;
- über die zweite Seite (77) des Einsatzes die Strömung von Fluid, welches in die dritte Öffnung (10) eintritt, direkt durch den Durchgangsabschnitt (73) des Einsatzes und von dort zu dem zweiten Abschnitt (9) der Filterkammer (3) innerhalb des mechanischen Filters (41) befördert wird, wo das Fluid durch den magnetischen Filter (50) gefiltert wird;
- das Fluid, durch den mechanischen Filter (41), aus dem zweiten Abschnitt (9) der Filterkammer herausströmt und in den ersten Abschnitt (8) der Filterkammer (3) läuft, und es von dort durch die erste Seite (74) des Einsatzes (70) weiter in Richtung der ersten Öffnung (10) befördert wird, wobei das Fluid aufgrund des erhöhten Randes (75) der ersten Seite (74) des Einsatzes und dem Äußeren der Teilungswand (21) nicht dazu in der Lage ist, nochmals durch den Durchgangsabschnitt (73) zu laufen;
- einer vierten Betriebskonfiguration, in welcher:
- die zweite Einlass-/Auslassöffnung (20), dazu bestimmt ist, in Kommunikation mit einer Leitung gesetzt zu sein, welche von einem Sanitär-und-Heizungssystem kommt, insbesondere einer Heizungswasser-Rückführungsleitung von einem System von Heizelementen, um eine Strömung von Wasser zu empfangen, welches einer Filtration auszusetzen ist;
- die dritte Einlass-/Auslassöffnung (30) durch ein Verschlusselement (4) unterbrochen ist;
- die erste Einlass-/Auslassöffnung (10) dazu bestimmt ist, in Kommunikation mit einer Leitung gesetzt zu sein, welche auf einen Boiler des Sanitär-und-Heizungssystems gerichtet ist, um die Strömung von Wasser einer Filtration folgend dorthin zu senden;
- der Strömungsleiteinsatz (70) in der zweiten Position für eine Verwendung ist;
- über die zweite Seite (77) des Einsatzes (70) die Strömung von Fluid, welches in die zweite Öffnung (20) eintritt, direkt durch den Durchgangsabschnitt (73) des Einsatzes und von dort zu dem zweiten Abschnitt (9) der Filterkammer (3) innerhalb des mechanischen Filters (41) befördert wird, wo das Fluid durch den magnetischen Filter (50) gefiltert wird;
- das Fluid, durch den mechanischen Filter (41), aus dem zweiten Abschnitt (9) der Filterkammer herausströmt und in den ersten Abschnitt (8) der Filterkammer (3) läuft, und es von dort durch die erste Seite (74) des Einsatzes (70) weiter in Richtung der ersten Öffnung (10) befördert wird, wobei das Fluid aufgrund des erhöhten Randes (75) der ersten Seite (74) des Einsatzes und dem Äußeren der Teilungswand (21) nicht dazu in der Lage ist, nochmals durch den Durchgangsabschnitt (73) zu laufen.

14. Verfahren zum Filtern eines Fluids, welches in einem Sanitär-und-Heizsystem zirkuliert, wobei das Verfahren die folgenden Schritte umfasst:
- Anordnen wenigstens einer Vorrichtung (1) zum Filtern eines Fluids nach einem der vorhergehenden Ansprüche;
- Identifizieren einer Leitung, welche von einem Sanitär-und-Heizungssystem kommt, insbesondere einer Heizungswasser-Rückführungsleitung von einem System von Heizelementen, welche eine Strömung von Wasser führt, welches einer Filtration auszusetzen ist;
- Identifizieren einer Leitung, welche auf einen Boiler des Sanitär-und-Heizungssystems gerichtet ist, wobei diese Leitung eine Strömung von Wasser, welches einer Filtration unterzogen worden ist, zu dem Boiler führt;
- Betreiben der Vorrichtung (1) wahlweise in einer der Betriebskonfigurationen.

## Revendications

1. Dispositif (1) de filtration d'un fluide circulant dans un système de plomberie et de chauffage, ledit dispositif (1) comprenant un corps (2) du dispositif qui règle à l'intérieur une chambre de filtration (3) qui est destinée à présenter un fluide à soumettre à une filtration passant à travers elle, ledit corps étant pourvu :
- d'une première ouverture d'entrée/de sortie (10), qui règle ladite chambre de filtration (3) en communication avec l'extérieur du dispositif et qui est conçue pour être associée à une conduite afin de recevoir de celui-ci, ou d'envoyer à celui-ci, un fluide entrant vers ledit, ou sortant dudit, corps du dispositif ;
- d'une seconde ouverture d'entrée/de sortie (20), qui règle ladite chambre de filtration (3) en communication avec l'extérieur du dispositif et qui est conçue pour être associée à une conduite afin de recevoir de celui-ci, ou d'envoyer à celui-ci, un fluide entrant vers ledit, ou sortant dudit, corps du dispositif ;
- d'une troisième ouverture d'entrée/de sortie (30), qui règle ladite chambre de filtration (3) en communication avec l'extérieur du dispositif et qui est conçue pour être associée à une conduite respective afin de recevoir de celui-ci, ou d'envoyer à celui-ci, du fluide entrant vers ledit, ou sortant dudit, corps du dispositif ;
le dispositif étant conçu pour faire fonctionner un passage de fluide à travers ladite chambre de filtration (3), d'une manière sélective en fonction d'une pluralité de configurations fonctionnelles, depuis une ouverture parmi ladite première ouverture d'entrée/de sortie (10), ladite seconde ouverture d'entrée/de sortie (20), et ladite troisième ouverture d'entrée/de sortie (30) vers une autre ouverture parmi ladite première ouverture d'entrée/de sortie (10), ladite seconde ouverture d'entrée/de sortie (20), et ladite troisième ouverture d'entrée/de sortie (30),
le dispositif comprenant en outre :
- des éléments de filtration (40) qui sont au moins partiellement logés à l'intérieur de ladite chambre de filtration (3), ou associés audit corps (2) du dispositif, et fonctionnellement interposés entre ladite première ouverture d'entrée/de sortie, ladite seconde ouverture d'entrée/de sortie et ladite troisième ouverture d'entrée/de sortie pour exécuter une filtration du fluide passant à travers la chambre de filtration ;
- un insert d'orientation d'écoulement (70) qui est logé à l'intérieur de ladite chambre de filtration (3) et conçu pour canaliser le fluide passant à travers la chambre de filtration, dans chacune de ladite pluralité de configurations fonctionnelles, de sorte que le fluide passe au moins partiellement à travers lesdits éléments de filtration (40) ;
le dispositif (1) étant **caractérisé en ce que** ledit insert d'orientation d'écoulement (70) est conçu pour fonctionner sélectivement au moins selon soit :
- une première position pour l'utilisation, dans laquelle il canalise le fluide circulant à l'intérieur de la chambre de filtration (3) afin d'empêcher un passage direct du fluide depuis la première ouverture (10) vers la seconde ouverture (20) ou depuis la première ouverture (10) vers la troisième ouverture (30) sans passer à travers les éléments de filtration (40) ; soit
- une seconde position pour l'utilisation, dans laquelle il canalise le fluide circulant à l'intérieur de la chambre de filtration (3) afin d'empêcher un passage direct du fluide depuis la seconde ouverture (20) vers la première ouverture (10) ou depuis la troisième ouverture (30) vers la première ouverture (10) sans passer à travers les éléments de filtration (40).

2. Dispositif (1) selon la revendication 1, comprenant un élément de fermeture (4) qui est conçu pour intercepter sélectivement une ouverture parmi ladite première ouverture d'entrée/de sortie (10), ladite seconde ouverture d'entrée/de sortie (20), et ladite troisième ouverture d'entrée/de sortie (30), et ladite pluralité de configurations fonctionnelles comprenant au moins :
- une première configuration fonctionnelle, dans laquelle ladite première ouverture (10) reçoit un écoulement de fluide entrant vers le dispositif, ladite seconde ouverture (20) envoie l'écoulement de fluide filtré sortant du dispositif et ladite troisième ouverture (30) est interceptée par ledit élément de fermeture ;
- une seconde configuration fonctionnelle, dans laquelle ladite première ouverture (10) reçoit un écoulement de fluide entrant vers le dispositif, ladite troisième ouverture (30) envoie l'écoulement de fluide filtré sortant du dispositif et ladite seconde ouverture (20) est interceptée par ledit élément de fermeture ;
- une troisième configuration fonctionnelle, dans laquelle ladite troisième ouverture (30) reçoit un écoulement de fluide entrant vers le dispositif, ladite première ouverture (10) envoie l'écoulement de fluide filtré sortant du dispositif et ladite seconde ouverture (20) est interceptée par ledit élément de fermeture ;
- une quatrième configuration fonctionnelle, dans laquelle ladite seconde ouverture (20) reçoit un écoulement de fluide entrant vers le dispositif, ladite première ouverture (10) envoie l'écoulement de fluide filtré sortant du dispositif et ladite troisième ouverture (30) est interceptée par ledit élément de fermeture.

3. Dispositif (1) selon l'une quelconque des revendications précédentes, ledit insert d'orientation d'écoulement (70) étant conçu pour être sélectivement positionné :
- dans ladite première position pour l'utilisation, lorsque le dispositif fonctionne dans ladite première configuration fonctionnelle ou dans ladite seconde configuration fonctionnelle ;
- dans ladite seconde position pour l'utilisation, lorsque le dispositif fonctionne dans ladite troisième configuration fonctionnelle ou dans ladite quatrième configuration fonctionnelle.

4. Dispositif (1) selon l'une quelconque des revendications précédentes, l'insert d'orientation d'écoulement (70) ayant un axe central (71), une paroi externe (72) s'étendant autour dudit axe central et une section de passage (73) à l'intérieur de la paroi externe et perpendiculaire à l'axe central, l'insert (70) ayant deux côtés opposés (74, 77) par rapport à l'axe central :
- un premier côté (74) étant prévu, sur la paroi externe (72), ayant un bord (75) qui est élevé par rapport à la section de passage (73), et une séparation (76) qui intercepte ladite section de passage (73) ;
- un second côté (77) ne présente pas de bord élevé sur la paroi externe ni de séparation sur la section de passage, permettant ainsi le passage de fluide à travers la section de passage, et étant prévu avec une portion de séparation (78) émergeant radialement depuis la paroi externe (72), à l'opposé de l'axe central (71), et sensiblement aligné sur la section de passage (73).

5. Dispositif (1) selon la revendication précédente, l'insert (70) étant structuré d'une manière telle que :
- le second côté (77) permet le passage de fluide, entrant depuis l'extérieur de l'insert, à travers la section de passage (73), le long d'un premier sens le long dudit axe central (71) ;
- le premier côté (74) obstruant le passage de fluide, entrant depuis l'extérieur de l'insert, à travers la section de passage (73), et déterminant un processus pour l'orienter le long d'un second sens le long dudit axe central (71), opposé audit premier sens.

6. Dispositif (1) selon l'une quelconque des revendications précédentes, ledit premier côté (74) et ledit second côté (77) constituant deux moitiés dudit insert (70) qui se font face l'une l'autre et qui sont raccordées le long d'un plan de division (79) dans lequel l'axe central (71) de l'insert repose, et l'insert (70) étant symétrique par rapport à un plan de symétrie dans lequel l'axe central de l'insert repose, et perpendiculaire audit plan de division.

7. Dispositif (1) selon l'une quelconque des revendications précédentes :
- dans ladite première position pour l'utilisation, l'insert (70) étant positionné d'une manière telle que le premier côté (74) de celui-ci fait face à la troisième ouverture d'entrée/de sortie (30) et que le second côté (77) de celui-ci fait face à la première ouverture d'entrée/de sortie (10) ;
- dans ladite seconde position pour l'utilisation, l'insert (70) étant positionné d'une manière telle que le premier côté (74) de celui-ci fait face à la première ouverture d'entrée/de sortie (10) et que le second côté (77) de celui-ci fait face à la troisième ouverture d'entrée/de sortie (30).

8. Dispositif (1) selon l'une quelconque des revendications précédentes, le corps (2) du dispositif ayant une forme sensiblement cylindrique et présentant un axe longitudinal (2A), une surface supérieure (5), une surface latérale externe (6) et une surface inférieure (7), et la première ouverture d'entrée/de sortie (10) et la troisième ouverture d'entrée/de sortie (30) étant localisées sur la surface latérale externe (6) du corps du dispositif et sur des côtés opposés par rapport à la chambre de filtration (3), et la seconde ouverture d'entrée/de sortie (20) étant localisée sur la surface supérieure (5) du corps du dispositif, et la première ouverture d'entrée/de sortie (10), la seconde ouverture d'entrée/de sortie (20) et la troisième ouverture d'entrée/de sortie (30) ayant une section circulaire et chacune desdites ouvertures (10, 20, 30) ayant un axe central respectif, et/ou l'axe central de la seconde ouverture d'entrée/de sortie (20) coïncidant avec l'axe longitudinal (2A) du corps (2) du dispositif, et/ou l'axe central (71) de l'insert (70) coïncidant avec l'axe longitudinal (2A) du corps (2) du dispositif et avec l'axe central respectif de la seconde ouverture d'entrée/de sortie (20).

9. Dispositif (1) selon l'une quelconque des revendications précédentes, l'insert d'orientation d'écoulement (70) étant localisé à l'intérieur de la chambre de filtration (3) d'une manière permettant d'entourer la seconde ouverture d'entrée/de sortie (20), et la chambre de filtration (3) étant délimitée latéralement par une surface latérale (3A), au-dessus par une surface supérieure (3B) et en-dessous par une surface inférieure (3C) du corps (2) du dispositif, et/ou la seconde ouverture d'entrée/de sortie (20) étant prévue avec une paroi de division (21) s'étendant à l'intérieur de la chambre de filtration (3) et localisée entre l'axe longitudinal (2A) du corps du dispositif et la première ouverture d'entrée/de sortie (10), et/ou ladite paroi de division (21) s'étendant, depuis la seconde ouverture d'entrée/de sortie (20), à l'intérieur de la chambre de filtration (3) le long d'un sens parallèle à l'axe longitudinal (2A) du corps du dispositif et sensiblement à une hauteur (Q) coïncidant avec les dimensions de la première ouverture d'entrée/de sortie (10) sur la surface latérale externe (6) du corps (2) du dispositif, et/ou la paroi de division (21) se terminant en-dessous avec une portion de déviation (22) du fluide et qui s'étend vers l'axe longitudinal (2A) du corps (2) du dispositif.

10. Dispositif (1) selon l'une quelconque des revendications précédentes, l'insert (70) étant localisé, à l'intérieur de la chambre de filtration (3), d'une manière telle que sa paroi externe (72) entoure au plan externe la portion de déviation (22) de la paroi de division (21), et/ou la portion de déviation (22) de la paroi de division (21) étant de forme complémentaire par rapport à la séparation (76) du premier côté (74) de l'insert (70), et/ou le positionnement de l'insert (70) et de la portion de déviation (22) de la paroi de division (21) l'un par rapport à l'autre permettant de déterminer que :
- lorsque l'insert (70) est sélectivement réglé dans ladite première position pour l'utilisation, le premier côté (74) de l'insert s'avère être sur le côté opposé à la portion de déviation (22) par rapport à l'axe longitudinal (2A) du corps, et faisant face à elle, de sorte que la séparation (76) et la portion de déviation (22) interceptent entièrement la section de passage (73) de l'insert (70), empêchant le passage du fluide à travers la section de passage ;
- lorsque l'insert (70) est sélectivement réglé dans ladite seconde position pour l'utilisation, le premier côté (74) de l'insert se trouve sur le même côté que la portion de déviation (22), par rapport à l'axe longitudinal (2A) du corps, et embrasse au plan externe la portion de déviation (22), tandis que le second côté (77) de l'insert se trouve sur le côté opposé à la portion de déviation (22) par rapport à l'axe longitudinal (2A) du corps, et comme le second côté (77) ne présente pas de séparation, il permet le passage de fluide à travers la section de passage (73),
et/ou, lorsque l'insert (70) est sélectivement réglé dans ladite première position pour l'utilisation, la continuité de surface est créée entre la séparation (76) et la portion de déviation (22) et est telle qu'elle intercepte entièrement la section de passage (73) de l'insert, et/ou le passage de l'insert (70) entre la première position pour l'utilisation et la seconde position pour l'utilisation a lieu à l'aide d'une rotation, préférablement de 180°, de l'insert autour de son axe central (71) propre, et/ou la séparation (76) de l'insert (70) prend sensiblement la forme d'une portion d'une couronne sphérique, ou d'une portion d'une coque sphérique, et la portion de déviation (22) de la paroi de division (21) présente sensiblement une forme respective d'une portion d'une couronne sphérique, ou d'une portion d'une coque sphérique.

11. Dispositif (1) selon l'une quelconque des revendications précédentes, les éléments de filtration (40) comprenant un filtre mécanique (41) conçu pour séparer les substances et des particules solides présentes dans le fluide à traiter du fluide lui-même dans lequel elles se trouvent en suspension, le filtre mécanique (41) ayant une structure pourvue d'une pluralité de passages (42) qui présentent une section de filtration donnée, de sorte que le passage du fluide depuis un côté interne (44) du filtre mécanique vers un côté externe (43) du filtre mécanique détermine une rétention, sur le côté interne (44), des substances et des particules présentes dans le fluide et ayant des dimensions supérieures à ladite section de filtration, et/ou le filtre mécanique (41) présentant une forme cylindrique s'étendant le long d'un axe central (45) entre une première extrémité (46) et une seconde extrémité (47), et étant positionné à l'intérieur de la chambre de filtration (3) d'une manière telle que ledit axe central (45) coïncide avec l'axe longitudinal (2A) du corps (2) du dispositif, et/ou le filtre mécanique (41) ayant une dimension radiale inférieure par rapport à la dimension radiale de la chambre de filtration (3), afin d'être éloigné de la surface latérale (3A) de la chambre (3) et de définir, à l'intérieur de la chambre, une première portion de chambre (8) à l'extérieur du filtre mécanique (41) et une seconde portion de chambre (9) à l'intérieur du filtre mécanique (41), et/ou le filtre mécanique (41) étant positionné axialement entre la surface inférieure (3C) du corps (2) du dispositif et l'insert d'orientation d'écoulement (70), et/ou le filtre mécanique (41) étant positionné dans la chambre sous l'insert (70) afin de se trouver en communication fluidique avec les trois ouvertures d'entrée/de sortie (10, 20, 30), mais sous elles le long de l'axe longitudinal (2A) du corps (2) du dispositif, dans un sens opposé depuis la seconde ouverture d'entrée/de sortie (20).

12. Dispositif (1) selon l'une quelconque des revendications précédentes, les éléments de filtration (40) comprenant un filtre magnétique (50) associé au corps (2) du dispositif et conçus pour collecter et retenir des substances et des particules ayant des propriétés ferromagnétiques et qui sont présentes dans le fluide à traiter, d'une manière permettant de les séparer du fluide passant à travers le dispositif, et/ou le corps (2) du dispositif comprenant une protubérance creuse (51) qui émerge axialement, dans la chambre de filtration, de ladite surface inférieure (3C) vers ladite surface supérieure (3B), ladite protubérance creuse (51) définissant, à l'extérieur du corps (2) du dispositif, un logement (52) qui est de forme allongée, correspondant à la protubérance creuse (51) et accessible depuis la surface inférieure (7), et/ou le filtre magnétique (50) comprenant au moins un élément magnétique (53) qui est conçu pour générer un champ magnétique permanent et inséré dans ledit logement (52) du corps (2) d'une manière permettant d'agir sur le fluide passant à travers la chambre de filtration (3) et de retenir les substances ferromagnétiques et les particules présentes dans le fluide sur la surface de ladite protubérance creuse (51) à l'intérieur du corps du dispositif, et/ou ladite protubérance creuse (51) émergeant de la surface inférieure (3C) étant entièrement contenue à l'intérieur du filtre mécanique (41), de sorte que le filtre magnétique (50) est positionné à l'intérieur de ladite seconde portion (9) de la chambre de filtration (3).

13. Dispositif (1) selon l'une quelconque des revendications précédentes, ledit dispositif (1) étant conçu pour fonctionner de manière sélective, lorsqu'il se trouve en cours d'utilisation, dans l'une des configurations fonctionnelles suivantes :
- une première configuration fonctionnelle, dans laquelle :
- la première ouverture d'entrée/de sortie (10) est destinée à être réglée en communication avec une conduite provenant d'un système de plomberie et de chauffage, particulièrement d'une conduite de retour d'eau de chauffage d'un système d'éléments de chauffage, afin de recevoir un écoulement de l'eau à soumettre à une filtration ;
- la seconde ouverture d'entrée/de sortie (20) est destinée à être réglée en communication avec une conduite orientée vers une chaudière du système de plomberie et de chauffage, afin d'y envoyer l'écoulement de l'eau suite à la filtration ;
- la troisième ouverture d'entrée/de sortie (30) est interceptée par un élément de fermeture (4) ;
- l'insert d'orientation d'écoulement (70) se trouve dans ladite première position pour l'utilisation ;
- par l'intermédiaire du second côté (77) de l'insert, et par l'intermédiaire de l'extérieur de la paroi de division (21), l'écoulement de fluide entrant vers la première ouverture (10) étant transporté directement à travers la section de passage (73) de l'insert et depuis là vers la seconde portion (9) de la chambre de filtration (3) à l'intérieur du filtre mécanique (41), où le fluide est filtré par le filtre magnétique (50) ;
- le fluide s'écoulant, à travers le filtre mécanique (41), hors de la seconde portion (9) de la chambre de filtration, et passant dans la première portion (8) de la chambre de filtration (3), et de là il est transporté à travers le premier côté (74) de l'insert (70) vers la seconde ouverture (20), le fluide ne pouvant pas passer à travers la section de passage (73) à nouveau du fait de la séparation (76) du premier côté (74) de l'insert (74) et de la portion de déviation (22) de la paroi de division (21) ;
- une seconde configuration fonctionnelle, dans laquelle :
- la première ouverture d'entrée/de sortie (10) est destinée à être réglée en communication avec une conduite provenant d'un système de plomberie et de chauffage, particulièrement d'une conduite de retour d'eau de chauffage d'un système d'éléments de chauffage, afin de recevoir un écoulement de l'eau à soumettre à une filtration ;
- la seconde ouverture d'entrée/de sortie (20) est interceptée par un élément de fermeture (4) ;
- la troisième ouverture d'entrée/de sortie (30) est destinée à être réglée en communication avec une conduite orientée vers une chaudière du système de plomberie et de chauffage, afin d'y envoyer l'écoulement de l'eau suite à la filtration ;
- l'insert d'orientation d'écoulement (70) se trouve dans ladite première position pour l'utilisation ;
- par l'intermédiaire du second côté (77) de l'insert, et par l'intermédiaire de l'extérieur de la paroi de division (21), l'écoulement de fluide entrant vers la première ouverture (10) étant transporté directement à travers la section de passage (73) de l'insert et depuis là vers la seconde portion (9) de la chambre de filtration (3) à l'intérieur du filtre mécanique (41), où le fluide est filtré par le filtre magnétique (50) ;
- le fluide s'écoule, à travers le filtre mécanique (41), hors de la seconde portion (9) de la chambre de filtration, et passe dans la première portion (8) de la chambre de filtration (3), et de là il est transporté à travers le premier côté (74) de l'insert (70) vers la troisième ouverture (30), le fluide ne pouvant pas passer à travers la section de passage (73) à nouveau du fait de la séparation (76) du premier côté (74) de l'insert et la portion de déviation (22) de la paroi de division (21) ;
- une troisième configuration fonctionnelle, dans laquelle :
- la troisième ouverture d'entrée/de sortie (30) est destinée à être réglée en communication avec une conduite provenant d'un système de plomberie et de chauffage, particulièrement d'une conduite de retour d'eau de chauffage d'un système d'éléments de chauffage, afin de recevoir un écoulement de l'eau à soumettre à une filtration ;
- la seconde ouverture d'entrée/de sortie (20) est interceptée par un élément de fermeture (4) ;
- la première ouverture d'entrée/de sortie (10) est destinée à être réglée en communication avec une conduite orientée vers une chaudière du système de plomberie et de chauffage, afin d'y envoyer l'écoulement de l'eau suite à la filtration ;
- l'insert d'orientation d'écoulement (70) se trouve dans ladite seconde position pour l'utilisation ;
- par l'intermédiaire du second côté (77) de l'insert, l'écoulement de fluide entrant vers la troisième ouverture (10) étant transporté directement à travers la section de passage (73) de l'insert et depuis là vers la seconde portion (9) de la chambre de filtration (3) à l'intérieur du filtre mécanique (41), où le fluide est filtré par le filtre magnétique (50) ;
- le fluide s'écoule, à travers le filtre mécanique (41), hors de la seconde portion (9) de la chambre de filtration, et passe dans la première portion (8) de la chambre de filtration (3), et de là il est transporté à travers le premier côté (74) de l'insert (70) vers la première ouverture (10), le fluide ne pouvant pas passer à travers la section de passage (73) à nouveau du fait du bord (75) élevé du premier côté (74) de l'insert et de l'extérieur de la paroi de division (21) ;
- une quatrième configuration fonctionnelle, dans laquelle :
- la seconde ouverture d'entrée/de sortie (20) est destinée à être réglée en communication avec une conduite provenant d'un système de plomberie et de chauffage, particulièrement d'une conduite de retour d'eau de chauffage d'un système d'éléments de chauffage, afin de recevoir un écoulement de l'eau à soumettre à une filtration ;
- la troisième ouverture d'entrée/de sortie (30) est interceptée par un élément de fermeture (4) ;
- la première ouverture d'entrée/de sortie (10) est destinée à être réglée en communication avec une conduite orientée vers une chaudière du système de plomberie et de chauffage, afin d'y envoyer l'écoulement de l'eau suite à la filtration ;
- l'insert d'orientation d'écoulement (70) se trouve dans ladite seconde position pour l'utilisation ;
- par l'intermédiaire du second côté (77) de l'insert (70), l'écoulement de fluide entrant vers la seconde ouverture (20) étant transporté directement à travers la section de passage (73) de l'insert et depuis là vers la seconde portion (9) de la chambre de filtration (3) à l'intérieur du filtre mécanique (41), où le fluide est filtré par le filtre magnétique (50) ;
- le fluide s'écoule, à travers le filtre mécanique (41), hors de la seconde portion (9) de la chambre de filtration, et passe dans la première portion (8) de la chambre de filtration (3), et de là il est transporté à travers le premier côté (74) de l'insert (70) vers la première ouverture (10), le fluide ne pouvant pas passer à travers la section de passage (73) à nouveau du fait du bord (75) élevé du premier côté (74) de l'insert et de l'extérieur de la paroi de division (21).

14. Procédé de filtration d'un fluide circulant dans un système de plomberie et de chauffage, ledit procédé comprenant les étapes consistant à :
- disposer au moins un dispositif (1) pour filtrer un fluide selon l'une quelconque des revendications précédentes ;
- identifier une conduite provenant d'un système de plomberie et de chauffage, particulièrement d'une conduite de retour d'eau de chauffage d'un système d'éléments de chauffage, transportant un écoulement d'eau à soumettre à une filtration ;
- identifier une conduite orientée vers une chaudière du système de plomberie et de chauffage, cette conduite transportant un écoulement d'eau qui a subi une filtration vers la chaudière ;
- faire fonctionner le dispositif (1) sélectivement dans l'une desdites configurations fonctionnelles.
